# EUROPEAN PATENT APPLICATION

(11) **EP 4 650 493 A1**
(43) Date of publication of application: **19.11.2025**
(21) Application number: 24176081.8
(22) Date of filing: 15.05.2024
(51) Int. Cl.: C25D 3/12, C25B 1/04, C25B 11/054, C25B 11/067, C25B 11/091, C25C 1/22, C25D 5/48, C25D 15/00

(54) **COMPOSITE FOR ELECTROCATALYSIS AND PREPARATION METHOD THEROF**

(71) Applicant: Hydrolyzer DOO, 11030 Belgrade (RS)
(72) Inventor: PASTI, Igor, 11030 Belgrade (RS); JOVANOVIC, Aleksandar, 11030 Belgrade (RS)
(74) Representative: Mewburn Ellis LLP

(57) **Abstract**

The present invention relates to a method of preparing a composite material, in particular one useful as a catalyst in an electrolytic hydrogen evolution reaction and/or the oxygen evolution reaction and/or urea oxidation-assisted water electrolysis. Provided is a method of preparing a composite material, the method comprising the steps of:
(i) electrochemically depositing material onto a substrate from a deposition solution comprising a nickel (II) salt and graphene oxide, to obtain a nickel-reduced graphene oxide composite material comprising nickel dispersed on reduced graphene oxide, said composite material being deposited on the substrate;
(ii) after step (i), placing the substrate, having the nickel-reduced graphene oxide composite deposited thereon, in an alkaline solution along with a counter electrode; and
(iii) after step (ii), partially electrochemically oxidising the nickel, to obtain a partially oxidised nickel-reduced graphene oxide composite material comprising partially oxidised nickel dispersed on reduced graphene oxide, said composite material being deposited on the substrate.

The composite of the invention demonstrates high catalytic activity for electrolytic hydrogen production under alkaline water electrolysis conditions (for example, a hydrogen evolution current of up to 500 mA cm⁻² at -1.35 V against a Reversible Hydrogen Electrode). High activity is demonstrated even when the substrate (on which the composite is deposited) does not contain any, or at most trace amounts, of nickel. Thus, the electrode of the invention (that is, the combination of composite material and substrate) demonstrates higher catalytic activity per unit mass of nickel compared to previous electrodes based on nickel foam.

The invention also provides a composite material, an electrode, a method of electrolytic hydrogen and/or production under alkaline electrolysis conditions, and a method of electrolytic urea oxidation under urea oxidation-assisted water electrolysis conditions, thereof.

## Description

### Field of the Invention

The present invention relates to a method of preparing a composite material, in particular one useful as a catalyst in electrolytic water electrolysis.

### Background

Hydrogen is considered the fuel of the future, but there are several problems associated with its widespread use. Apart from transportation and storage, the main problem is hydrogen production, given that pure hydrogen cannot be found in molecular form.

Hydrogen produced by water electrolysis is the most attractive as a potential fuel for systems based on hydrogen fuel cells. The hydrogen produced in this way is of high purity but is also the most expensive of all types of hydrogen currently produced. This is due to the low efficiency of electrocatalysts for hydrogen production, which are chosen based on the price-efficiency ratio. The most efficient catalyst to produce hydrogen is platinum, but due to its high price and limited reserves, its usability in the industrial production of hydrogen is limited. Alkaline electrolysis is the dominant type of hydrogen production, where nickel-based materials are used as the most common type of catalyst due to their lower cost relative to catalysts based on platinum and platinum group metals.

A problem with nickel-based catalysts is the gradual loss of activity due to the formation of nickel hydride during longer periods of electrolysis. This leads to poisoning of the Ni-active sites, thus lowering the activity of the catalyst. One approach to address this problem, by Bouzek et al., Phys. Chem. Chem. Phys., 2015, 17, 26864-26874, describes a reduced graphene oxide (rGO)-modified Ni electrode prepared by electrodeposition of graphene oxide onto a Ni foam substrate. The adsorbed hydrogen atoms on the Ni foam may spill onto the rGO. Thus, rGO serves as an H atom acceptor, enabling continuous cleaning of Ni-active sites on the foam and providing an alternative pathway for hydrogen production. The rGO-modified Ni foam cathode exhibited a current density of 223 mA cm⁻² at a cell voltage of 1.85 V.

A second problem is that the HER is notably slower in alkaline media as compared to acidic media, due to the slow rate of water dissociation, which is the first step of the HER mechanism in alkaline solutions. High overpotentials are required to initiate catalysis in alkaline media. One approach to this problem by Markovic et al., Nature Materials 11, 550-557 (2012) describes the formation of oxidised surface phases of Ni²⁺, where the dissociation of water in alkaline media is accelerated.

There have been many approaches towards methods of preparation of materials for electrolytic hydrogen production under alkaline electrolysis conditions.

CN105576216A describes the preparation of an alpha-nickel sulfide/graphene composite material and the application thereof as an electrochemical hydrogen evolution catalyst. The composite is prepared by hydrothermal synthesis and deposition onto a glassy carbon electrode. The catalytic activity of the composite demonstrated is up to 40 mA cm⁻² on -1.3 V vs. Saturated Calomel Electrode (SCE - recalculated from corresponding documents).

CN108588754A describes the preparation of a nickel molybdate/graphene composite material for electrocatalysis by hydrothermal synthesis. The catalytic activity of the composite demonstrated is up to 80 mA cm⁻² on -1.3 V vs. SCE.

CN109898093B describes the preparation of a nickel foam composite hydrogen-evolving electrode loaded with rGO/CoWO₄/Co₃O₄ by hydrothermal synthesis. The catalytic activity of the electrode demonstrated is 100 mA cm⁻² on -1.2 V vs. SCE.

CN109876833A describes the preparation of a nickel oxide-loaded sulfur- and phosphorus-doped graphene composite electrocatalyst, by hydrothermal synthesis, The catalytic activity of the composite demonstrated was less than 10 mA cm⁻² on -1.6 V vs. SCE.

CN106087002A describes preparation of a 3D structured Ni/rGO composite hydrogen evolution catalyst by supergravity electrodeposition for 10 to 100 minutes on nickel foam in a strong gravitational field of 350 g. The catalytic activity of the composite demonstrated is up to 100 mA cm⁻² on -1.2 to -1.3 V vs. SCE.

CN110876946A describes the preparation of MoS₂-rGO-NiO on a nickel foam hydrogen evolution composite material, by multiple applications of solutions on the nickel foam with thermal treatments. The catalytic activity demonstrated was up to 35 mA cm⁻² on -1.2 to -1.3 V vs. SCE.

CN106967986B describes the preparation of a Ni(OH)₂/Ni/reduced graphene oxide (rGO) composite hydrogen evolution electrode, comprising the steps of pre-treating a foamed nickel substrate, preparation of a Ni/rGO composite by supergravity electrodeposition onto the foamed nickel substrate for 60 minutes, and preparation of the Ni(OH)₂/Ni/rGO composite by hydrothermal synthesis for 1-12 hours. Thus, the obtained Ni(OH)₂/Ni/rGO has a tertiary structure, that is, the primary structure comprises a foamed nickel substrate, the secondary structure comprises a graphene sheet loaded with nickel nanoparticles, and the tertiary structure comprises Ni(OH)₂ nanosheets. The catalytic activity of the electrode demonstrated was up to 120 mA cm⁻² on -1.18 V vs. RHE (Reversible Hydrogen Electrode).

One of the main problems with the methods mentioned above is the complicated syntheses that require several demanding preparation steps, which are difficult to scale for industrial applications.

This problem is particularly significant in cases where powder is obtained during the synthesis as such a powder must then be mechanically fixed to the electrode that will be used in the electrolysis process, where the synthesis of the material itself can take tens of minutes to hours.

Another factor contributing to the efficiency of an electrolyzer (an electrolytic cell for hydrogen and/or oxygen production) is the performance of the anode at which the oxygen evolution reaction (OER) takes place. The OER at the anode is coupled to the HER at the cathode, and significantly impacts the overall energy efficiency of the electrolyzer due to sluggish OER kinetics that result in high overpotentials. Precious metal catalysts such as iridium and ruthenium have been studied as benchmark anode catalysts, however these are of high cost and natural scarcity. While there has been research into non-precious metal-based catalysts (NPMCs) as alternatives, such as non-precious transition metal oxides/(oxy)hydroxides, metal-free carbon materials, and hybrid non-precious metal and carbon composites, these materials often demonstrate poor activity and stability.

In some technologies, for example urea oxidation-assisted water electrolysis, other substances (such as urea) are added to the electrolyte, which can be oxidized at the anode at potentials lower than that corresponding to water decomposition. In this way, electrolysis takes place at lower potentials and requires lower energy input while H₂ is being produced at the cathode. While there has been research into the use of Ni-based anode catalysts for use in urea oxidation-assisted water electrolysis due to their cheap price, facile structure tuning, good compatibility, and easy active phase formation, monometallic Ni-based catalysts have low intrinsic activity, poor stability, and weak anti-poisoning ability.

Therefore, finding methods for rapid synthesis of efficient catalysts and electrodes for alkaline water electrolysis and urea oxidation-assisted water electrolysis is of great importance for hydrogen-based technologies.

The present invention has been devised in light of the above considerations.

### Summary of the Invention

The present inventors have developed a method of preparing a composite material useful as a catalyst for the hydrogen evolution reaction and/or the oxygen evolution reaction and/or urea oxidation-assisted water electrolysis; the material itself; a method of electrolytic hydrogen production and/or electrolytic oxygen production under alkaline electrolysis conditions using the composite or electrode thereof; and a method of urea oxidation under urea oxidation-assisted water electrolysis conditions using the composite or electrode thereof.

At its broadest, the composite material of the present invention comprises partially oxidised nickel particles dispersed on reduced graphene oxide flakes.

The composite material has a unique microstructure, obtained by electrodeposition from a solution containing a nickel salt and graphene oxide onto a substrate, followed by partial electrochemical oxidation of the deposited material.

The composite material may be used for industrial hydrogen production in industrial alkaline electrolysis processes, implemented in hydrogen generators of different capacities (for example, for laboratory applications), or combined with photovoltaic cells to generate hydrogen from renewable energy sources.

The composite may be used as a catalyst for electrolytic hydrogen production under alkaline water electrolysis conditions. The composite may be used as a catalyst for electrolytic oxygen production under alkaline water electrolysis conditions. The composite may be used as a catalyst for electrolytic urea oxidation under urea-oxidation assisted alkaline electrolysis conditions.

In particular, the invention allows the rapid synthesis of catalytic cathode and/or anode materials based on composites of partially oxidised nickel particles dispersed on reduced graphene oxide.

When used in a cathode, the composite material of the invention demonstrates high catalytic activity for electrolytic hydrogen production under alkaline water electrolysis conditions (for example, a hydrogen evolution current of up to 500 mA cm⁻² at -0.35 V versus RHE at room temperature).

When used in an anode, the composite material of the invention demonstrates high catalytic activity for electrolytic oxygen production under alkaline water electrolysis conditions (for example, an oxygen evolution current of up to 200 mA cm⁻² at 1.6 V versus RHE.

When used in an anode, the composite material of the invention demonstrates high catalytic activity for electrolytic urea oxidation under urea-oxidation assisted water electrolysis conditions (for example, a urea oxidation current of up to 325 mA cm⁻² at 1.9 V versus RHE.

High activity is demonstrated even when the substrate (on which the composite is deposited) does not contain any, or at most trace amounts, of nickel. Thus, the electrode of the invention (that is, the combination of composite material and substrate) demonstrates higher catalytic activity per unit mass of nickel compared to previous electrodes based on nickel foam.

In the method of the invention, the composite can be obtained directly on an electrode material and can be transferred directly to an electrolytic cell for hydrogen production (electrolyzer).

The synthesis is carried out by electrochemical deposition from a solution containing a source of Ni²⁺ and dispersed graphene oxide, followed by partial electrochemical oxidation of the surface of the nickel.

Accordingly, in a first aspect of the invention, there is provided a method of preparing a composite material, the method comprising the steps of:
(i) electrochemically depositing material onto a substrate from a deposition solution comprising a nickel (II) salt and graphene oxide, to obtain a nickel-reduced graphene oxide composite material comprising nickel dispersed on reduced graphene oxide, said composite material being deposited on the substrate;
(ii) after step (i), placing the substrate, having the nickel-reduced graphene oxide composite deposited thereon, in an alkaline solution along with a counter electrode; and
(iii) after step (ii), partially electrochemically oxidising the nickel, to obtain a partially oxidised nickel-reduced graphene oxide composite material comprising partially oxidised nickel dispersed on reduced graphene oxide, said composite material being deposited on the substrate.

This method allows the catalytic composite material to be obtained directly on an electrode (that is, the substrate material is suitably one which can be used as an electrode; (i.e., it suitably conducts electricity), as nickel and graphene oxide are electrochemically deposited directly onto the substrate in step (i). Thus, the invention can eliminate the step of transferring the catalytic composite to an electrode material. Additionally, unlike known methods which may take tens of minutes to hours to prepare the material, in this method, the total duration of the electrochemical deposition of step (i) and the partial electrochemical oxidation of step (iii) may be as little as 120 seconds, for example less than 10 minutes and more than 2 minutes, which significantly shortens the preparation of catalytic electrodes.

In step (i), Ni²⁺ and graphene oxide are deposited and reduced at the substrate during electrochemical deposition. Thus, the composite obtained in step (iii) comprises nickel, for example, in the form of particles, dispersed on reduced graphene oxide (rGO), for example, in the form of flakes.

Without wishing to be bound by theory, it is thought that when the composite material is used as a catalyst at the cathode during the hydrogen evolution reaction (HER), H atoms that adsorb onto Ni active sites upon water dissociation at the interface between the oxidised and non-oxidized part of the Ni surface during alkaline water electrolysis may spill onto the reduced graphene oxide (rGO) which serves as an H atom acceptor. This provides free Ni active sites, which are required for the HER to proceed. Additionally, the H atom spillover from the Ni active sites to rGO also provides an additional pathway for hydrogen production. This contributes to the overall production of hydrogen, thus increasing the catalyst's efficiency. As described herein, the composite obtained from step (i) may be designated as Ni cLDrGO.

Without wishing to be bound by theory, it is thought that when the composite material is used as a catalyst at the anode during the oxygen evolution reaction (OER) and/or urea-oxidation assisted water electrolysis, the rGO component serves as an efficient current collector and a highly stable support for the nickel particles, which are partially oxidized. In some embodiments, the substrate comprises nickel or titanium. In some embodiments, the substrate contains no, or at most trace amounts, of nickel. This reduces the overall content of nickel within the electrode (that is, in such embodiments, the composite plus the substrate), allowing a cheaper alternative to nickel to be used as the substrate, for example, titanium.

The surface Ni of Ni@rGO is partially electrochemically oxidised during step (iii). This generates surface phases of Ni²⁺ and/or Ni³⁺, while in other areas, the surface Ni is left unoxidized. Thus, the surface Ni is only partially electrochemically oxidised. The surface phases of Ni²⁺ may be of the form of nickel hydroxide or nickel (II) oxide. The nickel hydroxide may be selected from alpha-nickel hydroxide or beta-nickel hydroxide. The surface phases of Ni³⁺ may be of the form of nickel (III) oxide or nickel-oxyhydroxide.

Without wishing to be bound by theory, it is thought that when the composite material is used as a catalyst at the cathode during alkaline water electrolysis, water dissociation takes place at the Ni | Ni²⁺ and/or Ni | Ni³⁺ surface phase interface. H adsorbs onto metallic Ni, while OH⁻ from water goes to the Ni²⁺ and/or Ni³⁺ surface phase sites and then gets released back into the solution. As the Ni²⁺ and/or Ni³⁺ surface phases provide strong binding for OH⁻, the water dissociation barrier is reduced (lowered) according to Bronsted-Polanyi relations, which assert a nearly linear relationship between the reaction enthalpy and kinetic barrier. In this particular case, there is stronger binding of OH⁻ onto the oxidised part of the Ni surface, making the reaction enthalpy more exothermic and, thus, reducing the barrier for water dissociation, making it faster. As described herein, the surface-modified composite obtained in step (iii) may be designated as ox-Ni cLDrGO.

Without wishing to be bound by theory, it is thought that when the composite material is used as a catalyst at the anode during alkaline water electrolysis, the oxidation of the catalyst surface (that is - the partial oxidation of the nickel particles) helps facilitate the splitting of water molecules and hydroxide ions, enhancing the production of O₂ molecules.

In this way, a composite is obtained that shows high electrocatalytic activity for the evolution of hydrogen and/or oxygen, improved in comparison to the case when the deposition of the catalyst is carried out without the presence of graphene oxide, or where no oxidised surface phases of Ni are present.

The inventors have discovered that a method comprising the combination of step (i) and step (iii) unexpectedly provides a composite comprising a lower weight percentage (wt.%) of nickel relative to the total weight of the composite, compared to known Ni-based catalysts, while demonstrating comparable or higher catalytic activity in cathodes and anodes (for example, a hydrogen evolution current of up to 500 mA cm⁻² at -0.35 V against RHE, an oxygen evolution current of up to 200 mA cm⁻² at 1.7 V against RHE and a urea oxidation current of up to 325 mA cm⁻² at 1.9 V against RHE).

In some embodiments, nickel is present in the composite material, obtained in step (iii), in an amount from 20 to 80 wt.% based on the total weight of the composite material.

In some embodiments, the concentration of the nickel (II) salt in the deposition solution is from 0.01 to 3 mol dm⁻³, wherein optionally the concentration of the nickel (II) salt in the deposition solution is about 0.125 mol dm⁻³.

In some embodiments, the concentration of graphene oxide in the deposition solution is from 0.01 to 2 g dm⁻³, wherein optionally the concentration of graphene oxide in the deposition solution is about 0.13 g dm⁻³.

In some embodiments, the electrochemical deposition of step (i) is performed under constant current conditions.

In some embodiments, the electrochemical deposition of step (i) is performed at a constant current density selected within the range of 50 to 1000 mA cm⁻², wherein optionally the electrochemical deposition of step (i) is performed at a constant current density of about 500 mA cm⁻².

In some embodiments, the electrochemical deposition of step (i) is performed under constant potential conditions.

In some embodiments, the electrochemical deposition of step (i) is performed at a constant potential selected within the range of 2.5 to 6.0 V, wherein optionally the electrochemical deposition of step (i) is performed at a constant potential of about 4 V.

In some embodiments, the electrochemical deposition of step (i) is performed for a duration of 5 to 500 seconds, wherein optionally the electrochemical deposition of step (i) is performed for a duration of about 90 seconds.

In some embodiments, the partial electrochemical oxidation of step (iii) is performed for a duration of 5 to 2000 seconds, wherein optionally the electrochemical oxidation of step (iii) is performed for a duration of about 30 seconds.

In some embodiments, the partial electrochemical oxidation of step (iii) is performed at a voltage equivalent to a voltage of from 0 V to 2 V towards a Reversible Hydrogen Electrode, wherein optionally the partial electrochemical oxidation of step (iii) is performed at a voltage equivalent to a voltage of about 1.0 V towards a Reversible Hydrogen Electrode.

In some embodiments, the method further comprises the step(s) of:
(iv) after step (iii), removing the composite material from the substrate to obtain a free composite material; and optionally
(v) after step (iv), comminuting the free composite to obtain a powdered composite.

In a second aspect of the invention, there is provided a composite material obtained or obtainable by the method of the first aspect of the invention. Accordingly, in a second aspect of the invention, there is provided a composite material, obtained or obtainable by a method of preparing a composite material, the method comprising the steps of:
(i) electrochemically depositing material onto a substrate from a deposition solution comprising a nickel (II) salt and graphene oxide, to obtain a nickel-reduced graphene oxide composite material comprising nickel dispersed on reduced graphene oxide, said composite material being deposited on the substrate;
(ii) after step (i), placing the substrate, having the nickel-reduced graphene oxide composite deposited thereon, in an alkaline solution along with a counter electrode; and
(iii) after step (ii), partially electrochemically oxidising the nickel, to obtain a partially oxidised nickel-reduced graphene oxide composite material comprising partially oxidised nickel dispersed on reduced graphene oxide, said composite material being deposited on the substrate.

The composite material comprises partially oxidised nickel particles dispersed on reduced graphene oxide flakes.

The nickel is in the form of particles, that is, discrete locations of deposition, rather than as a contiguous layer.

The reduced graphene oxide is in the form of flakes, that is, particles of low thickness (1-10 layers) and significantly larger diameter.

In some embodiments, nickel is present in the composite material in an amount from 20 to 80 wt.% based on the total weight of the composite material.

In a third aspect of the invention, there is provided an electrode comprising a composite material, obtained or obtainable by the method of the first aspect of the invention, or comprising a composite material of the second aspect of the invention. The electrode suitably therefore comprises a composite material comprising partially oxidised nickel particles dispersed on reduced graphene oxide, deposited on a substrate which is electrically conductive.

The electrode may be for use as a cathode for electrolytic hydrogen production under alkaline electrolysis conditions. The electrode may be for use as an anode for electrolytic oxygen production under alkaline electrolysis conditions. The electrode may be for use as an anode for electrolytic urea oxidation under urea-oxidation assisted alkaline electrolysis conditions.

To enable this, the substrate material is suitably electrically conductive.

In some embodiments, the substrate comprises nickel or titanium.

In some embodiments, the substrate contains no, or at most trace amounts, of nickel.

In some embodiments, nickel is present in the electrode in an amount from 20 to 80 wt.% based on the total weight of the composite material.

In a fourth aspect of the invention, there is provided a method of electrolytic hydrogen production under alkaline electrolysis conditions, the method comprising the steps of:
(A) setting up a system comprising an aqueous alkaline solution, a first electrode comprising a composite material according to the second aspect of the invention, a second electrode, and an ion-permeable diaphragm placed between the first and second electrode; and
(B) applying a current between the first electrode and the second electrode to generate hydrogen at the first electrode.

In some embodiments, the first electrode is an electrode according to the third aspect of the invention. The first electrode may be a cathode.

In some embodiments, the method further comprises the step of:
(C) partially electrochemically oxidising the first electrode, step (C) being performed periodically during the conduction of step (B),
wherein optionally step (C) is performed periodically at intervals of from 50 to 5400 seconds and/or each performance of step (C) is for a duration of from 0.5 to 100 seconds. This allows the catalytic activity of the ox-Ni@rGO to be maintained during electrolytic hydrogen evolution under alkaline electrolysis conditions. The oxidation step acts to 'top up' the oxidation level of the partially oxidised nickel on the rGO.

In fifth aspect of the invention, there is provided a method of electrolytic oxygen production under alkaline electrolysis conditions, the method comprising the steps of:
(A) setting up a system comprising an aqueous alkaline solution, a first electrode, a second electrode comprising a composite material according to the second aspect of the invention, and an ion-permeable diaphragm placed between the first and second electrode; and
(B) applying a current between the first electrode and the second electrode to generate oxygen at the second electrode.

In some embodiments, the second electrode is an electrode according to the third aspect of the invention. The second electrode may be an anode.

In some embodiments, the method further comprises the step of:
(C) partially electrochemically oxidising the second electrode, step (C) being performed periodically during the conduction of step (B),
wherein optionally step (C) is performed periodically at intervals of from 50 to 5400 seconds and/or each performance of step (C) is for a duration of from 0.5 to 100 seconds. This allows the catalytic activity of the ox-Ni@rGO to be maintained during electrolytic oxygen evolution under alkaline electrolysis conditions. The oxidation step acts to 'top up' the oxidation level of the partially oxidised nickel on the rGO.

In a sixth aspect of the invention, there is provided a method of electrolytic urea oxidation (that is, suitably, of nitrogen and carbon dioxide production) under urea oxidation-assisted water electrolysis conditions, the method comprising the steps of:
(A) setting up a system comprising a solution comprising an aqueous alkaline solution and urea, a first electrode, a second electrode comprising a composite material according to the second aspect of the invention, and an ion-permeable diaphragm placed between the first and second electrode; and
(B) applying a current between the first electrode and the second electrode to oxidise urea (that is, suitably, to generate nitrogen and carbon dioxide) at the second electrode.

In some embodiments, the method further comprises the step of:
(C) partially electrochemically oxidising the second electrode, step (C) being performed periodically during the conduction of step (B),
wherein optionally step (C) is performed periodically at intervals of from 50 to 5400 seconds and/or each performance of step (C) is for a duration of from 0.5 to 100 seconds. This allows the catalytic activity of the ox-Ni@rGO to be maintained during urea oxidation evolution under alkaline electrolysis conditions. The oxidation step acts to 'top up' the oxidation level of the partially oxidised nickel on the rGO.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1** shows **(****Figure 1A****)** scanning electron microscopy (SEM) micrographs of Ni@rGO composites deposited at different current densities, at a concentration of graphene oxide in the deposition solution of 0.13 g dm⁻³, and **(****Figure 1B****)** the corresponding hydrogen evolution curves as compared to those for corresponding electrodes prepared using deposition solutions which did not contain graphene oxide (that is, where pure nickel was deposited).
**Figure 2** shows **(****Figure 2A****)** SEM micrographs of Ni@rGO composites deposited at different concentrations of dispersed graphene oxide at a current of 200 mA cm⁻², and **(****Figure 2B****)** the corresponding hydrogen evolution curves.
**Figure 3** shows **(****Figure 3A****)** the results of transmission electron microscopy (TEM) of the Ni@rGO composite deposited at a current of 200 mA cm⁻², with **(****Figure 3B****)** the results of electron diffraction analysis.
**Figure 4** shows the currents of hydrogen evolution on electrochemically precipitated nickel and on the Ni@rGO composite, before ("Pure Ni", Ni@rGO) and after ("Ni after oxidative treatment", ox-Ni@rGO) electrochemical oxidation.
**Figure 5** shows a SEM micrograph of a single flake of ox-Ni@rGO composite. The SEM micrograph shows partially oxidised nickel particles dispersed on a single reduced graphene oxide flake.
**Figure 6** shows the periodic oxidation of the ox-Ni@rGO composite during HER, with the aim of maintaining high catalytic activity for hydrogen evolution.
**Figure 7** shows the currents of oxygen evolution on Ni after oxidative treatment (ox-Ni) and ox-Ni cLDrGO.
**Figure 8** shows the currents of urea oxidation on Ni after oxidative treatment (ox-Ni) and ox-Ni cLDrGO.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

### Preparation of Composite - Method

The first aspect of the invention provides a method of preparing a composite material, the method comprising the steps of:
(i) electrochemically depositing material onto a substrate from a deposition solution comprising a nickel (II) salt and graphene oxide, to obtain a nickel-reduced graphene oxide composite material comprising nickel dispersed on reduced graphene oxide, said composite material being deposited on the substrate;
(ii) after step (i), placing the substrate, having the nickel-reduced graphene oxide composite deposited thereon, in an alkaline solution along with a counter electrode; and
(iii) after step (ii), partially electrochemically oxidising the nickel, to obtain a partially oxidised nickel-reduced graphene oxide composite material comprising partially oxidised nickel dispersed on reduced graphene oxide, said composite material being deposited on the substrate.

The present inventors have established that a composite, obtained or obtainable by such a method has a lower wt.% of nickel compared to known Ni-based catalysts, yet demonstrates comparable or higher catalytic activity (for example, a hydrogen evolution current of up to 500 mA cm⁻² at -0.35 V against a Reversible Hydrogen Electrode an oxygen evolution current of up to 200 mA cm⁻² at 1.7 V against RHE and a urea oxidation current of up to 325 mA cm⁻² at 1.9 V against RHE).

The first step of the method is the electrochemical deposition of step (i). In this step, nickel and graphene oxide within the deposition solution of step (i) are electrochemically deposited onto a substrate to form a composite comprising nickel dispersed on reduced graphene oxide.

The nickel is thought to be in the form of particles, that is, discrete locations of deposition, rather than as a contiguous layer.

The reduced graphene oxide (note, graphene oxide in the deposition solution is naturally reduced on deposition, meaning that the deposited specie is reduced graphene oxide rather than graphene oxide) is thought to be in the form of flakes, that is, particles of low thickness (1-10 layers) and significantly larger diameter. The term `flake' is well used and understood in the field of 2-dimensional materials.

### Step (i) - Deposition

The solution in step (i) may be known as the deposition solution, as described herein. The deposition solution comprises a nickel (II) salt.

In some embodiments, the concentration of the nickel (II) salt in the solution of step (i) is 3 mol dm⁻³or less, such as 2 mol dm⁻³ or less, 1 mol dm⁻³ or less, 0.5 mol dm⁻³ or less, 0.4 mol dm⁻³ or less, 0.3 mol dm⁻³ or less, or 0.2 mol dm⁻³ or less. In some embodiments, the concentration of the nickel (II) salt in the solution of step (i) is 0.01 mol dm⁻³ or more, such as 0.05 mol dm⁻³ or more, 0.06 mol dm⁻³ or more, 0.07 mol dm⁻³ or more, 0.08 mol dm⁻³ or more, 0.09 mol dm⁻³ or more, or 0.1 mol dm⁻³ or more.

The concentration of the nickel (II) salt in the solution of step (i) may be an amount selected from a range with the upper and lower limits selected from the values given above. For example, in some embodiments, the concentration of the nickel (II) salt in the solution of step (i) is from 0.01 to 3 mol dm⁻³, wherein optionally the concentration of the nickel (II) salt in the deposition solution is about 0.125 mol dm-3

In preferred embodiments, the concentration of the nickel (II) salt in the solution of step (i) is from 0.1 to 1 mol dm⁻³, preferably from 0.1 to 0.2 mol dm⁻³, for example about 0.125 mol dm⁻³.

In some embodiments, the nickel (II) salt in the solution of step (i) is selected from nickel sulphate (NiSOz), nickel carbonate (NiCOs), nickel nitrate (Ni(NOs)z), nickel chloride (NiCl2) and nickel phosphate (Ni₃(PO₄)₂).

In preferred embodiments, the nickel (II) salt in the solution of step (i) is nickel sulphate (NiSOz).

The deposition solution of step (i) also comprises graphene oxide dispersed within the solution.

In some embodiments, the concentration of graphene oxide in the solution of step (i) is 2 g dm⁻³ or less, such as 1 g dm⁻³ or less, 0.5 g dm⁻³ or less, 0.4 g dm⁻³ or less, 0.3 g dm⁻³ or less, or 0.2 g dm⁻³ or less. In some embodiments, the concentration of graphene oxide in the solution of step (i) is 0.01 g dm⁻³ or more, such as 0.05 g dm⁻³ or more, 0.06 g dm⁻³ or more, 0.07 g dm⁻³ or more, 0.08 g dm⁻³ or more, 0.09 g dm⁻³ or more, or 0.1 g dm⁻³ or more.

The concentration of graphene oxide in the solution of step (i) may be an amount selected from a range with the upper and lower limits selected from the values given above. For example, in some embodiments, the concentration of graphene oxide in the solution of step (i) is from 0.01 to 2 g dm⁻³, wherein optionally the concentration of graphene oxide in the solution of step (i) is about 0.13 g dm⁻³.

In some embodiments, the concentration of graphene oxide in the solution of step (i) is from 0.01 to 1.7 g dm⁻³, preferably from 0.05 to 1.5 g dm⁻³, and more preferably from 0.1 to 1.3 g dm⁻³, for example about 0.13 g dm⁻³.

Without wishing to be bound by theory, it is thought that when at higher concentrations, agglomeration of graphene oxide in the deposition solution may occur and reduce flake deposition efficacy.

In some embodiments, the solution of step (i) further comprises an acid. At higher pH, the graphene oxide can precipitate, thus acidic conditions in the solution of step (i) is preferred.

In some embodiments, the concentration of the acid in the solution of step (i) is from 0.1 to 1 mol dm⁻³, preferably from 0.1 to 0.5 mol dm⁻³, more preferably from 0.1 to 0.3 mol dm⁻³, for example about 0.2 mol dm³.

In some embodiments, the pH of the deposition solution of step (i) is a value lower than 7.0 and equal to or above 3.5.

In some embodiments, the pH of the deposition solution of step (i) is a value from 3.5 to 6.5, preferably from 4.0 to 6.5, more preferably from 4.5 to 6.5, for example about 5.0.

In preferred embodiments, the solution of step (i) comprises boric acid (H₃BO₃).

In some embodiments, the solution of step (i) comprises an ammonium salt. Ammonium salts contribute to the conductivity and control the pH of the deposition solution as well as stabilizing the Ni²⁺ ions from the nickel (II) salt.

In some embodiments, the concentration of the ammonium salt in the solution of step (i) is from 0.1 to 1 mol dm⁻³, preferably from 0.2 to 0.8 mol dm⁻³, more preferably from 0.4 to 0.6 mol dm⁻³, for example about 0.5 mol dm⁻³.

In preferred embodiments, the solution of step (i) comprises ammonium chloride (NH₄Cl).

In step (i), nickel and reduced graphene oxide are electrochemically deposited onto a substrate.

Once the deposition is complete, by suitable selection of the substrate material it may be directly used as an electrode for electrolytic hydrogen production under alkaline electrolysis conditions.

The electrode may be for use as a cathode for electrolytic hydrogen production under alkaline electrolysis conditions. The electrode may be for use as an anode for electrolytic oxygen production under alkaline electrolysis conditions. The electrode may be for use as an anode for urea oxidation under urea-oxidation assisted alkaline electrolysis conditions.

To enable this, the substrate material is suitably electrically conductive.

In some embodiments, the substrate of step (i) comprises nickel or titanium.

In preferred embodiments, the substrate of step (i) comprises titanium.

In some embodiments, the substrate of step (i) is a titanium network. In some embodiments, the substrate of step (i) is a titanium mesh. In some embodiments, the substrate of step (i) is a titanium grid.

In some embodiments, the substrate contains no, or at most trace amounts, of nickel. For example, it may be at most 10 wt% nickel, at most 5 wt% nickel, at most 2 wt% nickel, at most 1 wt% nickel or even at most 0.5 wt% nickel.

In some embodiments, the substrate of step (i) comprises nickel.

In some embodiments, the substrate of step (i) is a nickel network. In some embodiments, the substrate of step (i) is a nickel mesh. In some embodiments, the substrate of step (i) is a nickel grid. In some embodiments, the substrate of step (i) is a nickel foam. In some embodiments, the substrate of step (i) is a nickel perforated sheet.

In some embodiments, the thickness of the substrate is from 50 to 400 µm, wherein optionally the thickness of the substrate is from 100 to 150 µm.

In step (i), Ni²⁺ and graphene oxide, present in the deposition solution, are electrochemically deposited onto the substrate. During electrochemical deposition, Ni²⁺ is reduced to metallic Ni and graphene oxide is reduced to reduced graphene oxide at the substrate.

The electrochemical deposition may be carried out in a system in which the substrate on which the deposition is carried out is connected to the negative pole of a DC voltage source, and a counter electrode such as a nickel wire is connected to the positive pole wire of the DC voltage source. The electrochemical deposition is suitably performed at current densities calculated according to the geometrical surface of the substrate on which the deposition is performed.

In preferred embodiments, the electrochemical deposition of step (i) is performed under constant current conditions.

In some embodiments, the electrochemical deposition of step (i) is performed at a constant current density selected within the range of from 50 to 1000 mA cm⁻², preferably from 150 to 800 mA cm⁻², more preferably from 250 to 700 mA cm⁻², for example about 500 mA cm⁻².

In some embodiments, the electrochemical deposition of step (i) is performed under constant potential conditions.

In some embodiments, the electrochemical deposition of step (i) is performed at a constant potential selected within the range of 2.5 to 6.0 V, preferably from 2.5 to 5.0 V, more preferably from 2.5 to 4.5 V, for example about 4.0 V.

In some embodiments, the electrochemical deposition of step (i) is performed for a duration of 5 to 500 seconds, wherein optionally the electrochemical deposition of step (i) is performed for a duration of about 90 seconds.

In some embodiments, the electrochemical deposition of step (i) is performed for a duration of 10 to 300 seconds, preferably from 50 to 200 seconds, more preferably 60 to 150 seconds, for example about 90 seconds.

Following electrochemical deposition, a composite material comprising nickel dispersed on reduced graphene oxide (Ni@rGO) is obtained on the substrate.

In preferred embodiments, the nickel in the composite material obtained in step (i) is particulate with nanometer dimensions (for example, particles of average diameter 10 nm to 50 nm, measured by SEM).

The nickel in the composite material obtained in step (i) may form a nickel lattice.

In some embodiments, the nickel lattice is in the form of a surface-centred cubic lattice.

In some embodiments, step (i) further comprises washing the obtained composite material deposited on the substrate with distilled water.

In some embodiments, step (i) is performed at temperature selected within a range of 25 to 70 °C.

Suitably, step (i) is conducted under normal gravitational conditions; for example standard gravity. For example, in some embodiments the gravitational field under which step (i) is conducted is between 0.8 and 1.5 *g*₀

### Step (ii) - Immersion

The second step of the method takes place after step (i) and comprises placing the substrate obtained in step (i), having the nickel-reduced graphene oxide composite deposited thereon, in an alkaline solution along with a counter electrode. Thus, the electrochemical oxidation of step (iii) is performed in an alkaline solution. The alkaline solution of step (ii) may also be suitable for performing alkaline water electrolysis. The alkaline solution of step (ii) may also be suitable for performing urea-oxidation assisted alkaline water electrolysis, following the addition of urea to the alkaline solution. Alternatively, the alkaline solution of step (ii) may in some embodiments comprise urea, therefore, the alkaline solution of step (ii) may also be suitable for performing urea-oxidation assisted alkaline water electrolysis. Thus, the composite obtained in step (iii) does not need to be transferred to a different solution for use as a catalyst or catalytic electrode for electrolytic hydrogen production under alkaline electrolysis conditions. As such, the method of the invention provides a more efficient method of obtaining and using electrodes for alkaline electrolysis.

In some embodiments, the concentration of the alkaline solution of step (ii) is from 0.1 to 6 mol dm⁻³, preferably from 0.3 to 3 mol dm⁻³, more preferably from 0.5 to 1.5 mol dm⁻³, for example about 1 mol dm⁻³.

The pH of the alkaline solution of step (ii) is a value greater than 7.0 and equal to or below 14.0.

In some embodiments, the pH of the alkaline solution of step (ii) is a value from 8.0 to 14.0, preferably from 9.0 to 14.0, more preferably from 10.0 to 14.0, for example about 14.0.

In some embodiments, the alkaline solution of step (ii) is selected from a potassium hydroxide solution (KOH)_{aq}, a sodium hydroxide solution (NaOH)_{aq}, a lithium hydroxide solution (LiOH)_{aq}, and a combination of any two or three thereof.

In preferred embodiments, the alkaline solution of step (ii) is a potassium hydroxide solution (KOH)_{aq}.

In some embodiments, the counter electrode of step (ii) is a Ni-based electrode.

A reference electrode may be used to measure the working electrode potential. Thus, the reference electrode may be used to measure the potential of the half cell at the substrate having the nickel-reduced graphene oxide composite deposited thereon, obtained in step (i).

In some embodiments, the reference electrode of step (ii) is selected from a Reversible Hydrogen Electrode and a Saturated Calomel Electrode.

In preferred embodiments, the reference electrode of step (ii) is a Reversible Hydrogen Electrode.

### Step (iii) - Oxidation

The third step (iii) of the method takes place after step (ii). In step (iii), the nickel of the composite is electrochemically oxidised in some regions to form surface oxide phases of Ni²⁺ and/or Ni³⁺. Other regions of the surface Ni remain unoxidized. Thus, the surface Ni is only partially electrochemically oxidised.

The partial electrochemical oxidation of step (iii) can be carried out in the alkaline solution of step (ii) as described above.

The electrochemical oxidation is selective to nickel, as the electrochemical reduction of graphene oxide in step (i) is irreversible. The substrate generally also remains unoxidized as it is coated by the composite material obtained in step (i) following electrochemical deposition.

The surface phases of Ni²⁺ may be of the form of nickel hydroxide or nickel (II) oxide. The nickel hydroxide may be selected from alpha-nickel hydroxide and beta-nickel hydroxide. The surface phases of Ni³⁺ may be of the form of nickel-oxyhydroxide or nickel (III) oxide.

In some embodiments, the partial electrochemical oxidation of step (iii) is performed for a duration of from 5 to 2000 seconds, wherein optionally the partial electrochemical oxidation of step (iii) is performed for a duration of 30 seconds.

In some embodiments, the partial electrochemical oxidation of step (iii) is performed for a duration of from 10 to 1000 seconds, preferably from 15 to 100 seconds, more preferably 20 to 50 seconds, for example about 30 seconds.

In some embodiments, the total duration of the electrochemical deposition of step (i) and the partial electrochemical oxidation of step (iii) may be within the range 50 to 600 seconds, preferably from 100 to 300 seconds, for example about 120 seconds.

In some embodiments, the partial electrochemical oxidation of step (iii) is performed at a voltage of from 0 V to 2 V towards the reference electrode.

For example, the partial electrochemical oxidation of step (iii) may be performed at a voltage equivalent to a voltage of from 0 V to 2 V towards a Reversible Hydrogen Electrode, wherein optionally the partial electrochemical oxidation of step (iii) is performed at a voltage equivalent to a voltage of about 1.0 V towards a Reversible Hydrogen Electrode.

That is, the voltage may be chosen dependent on the identity of the reference electrode. As many different reference electrodes can be envisaged, leading to a variety of suitable 'absolute' voltages, it can be useful to discuss the voltage in terms of what the effective potential difference *would be* were the counter electrode to be a Reversible Hydrogen Electrode. That is not to say that said Reversible Hydrogen Electrode is necessarily present in embodiments of the invention; it is merely a useful reference point against which voltages can be assessed. Herein voltage is sometimes therefore discussed in terms of a voltage "equivalent to" a voltage towards a Reversible Hydrogen Electrode. The potential may be recalculated to be towards a Reversible Hydrogen Electrode from any other reference electrode. Other reference electrodes may include a Saturated Calomel Electrode.

In some embodiments, the partial electrochemical oxidation of step (iii) is performed at a voltage of from 0.3 V to 1.5 V, preferably from 0.5 V to 1.2 V, more preferably 0.6 V to 1.1 V, for example about 1.0 V, towards the reference electrode.

For example, the partial electrochemical oxidation of step (iii) may be performed at a voltage equivalent to a voltage of from 0.3 V to 1.5 V, preferably from 0.5 V to 1.2 V, more preferably 0.6 V to 0.1.1 V, for example at a voltage equivalent to a voltage of about 1.0 V, towards a Reversible Hydrogen Electrode.

In some embodiments, the partial electrochemical oxidation of step (iii) is performed at a voltage of from 0 V to 2 V towards a Reversible Hydrogen Electrode.

In some embodiments, the partial electrochemical oxidation of step (iii) is performed at a voltage of from 0.3 V to 1.5 V, preferably from 0.6 V to 1.2 V, more preferably 0.8 V to 1.1 V, for example about 1.0 V, towards a Reversible Hydrogen Electrode.

In some embodiments, the method comprises the steps of
(i) electrochemically depositing material onto a titanium network, from a deposition solution comprising 0.125 mol dm⁻³ nickel sulfate (NiSO₄), 0.2 mol dm⁻³ boric acid (H₃BO₃), 0.5 mol dm⁻³ ammonium chloride (NH₄Cl) and graphene oxide, under constant current conditions for a duration of 90 seconds, to obtain a nickel-reduced graphene oxide composite material comprising nickel dispersed on reduced graphene oxide, said composite material being deposited on the titanium network;
(ii) after step (i), placing the titanium network, having the nickel-reduced graphene oxide composite deposited thereon, in an alkaline solution along with a counter electrode; and
(iii) after step (ii), partially electrochemically oxidising the nickel for a duration of 30 seconds at a voltage equivalent to a voltage of 1.0 V towards a Reversible Hydrogen Electrode, to obtain a partially oxidised nickel-reduced graphene oxide composite material comprising partially oxidised nickel dispersed on reduced graphene oxide, said composite material being deposited on the substrate.

Following partial electrochemical oxidation, a composite material comprising partially oxidised nickel dispersed on reduced graphene oxide (ox-Ni@rGO) is obtained, said composite material being deposited on the substrate.

In some embodiments, nickel is present in the composite material, obtained in step (iii), in an amount from 20 to 80 wt.% based on the total weight of the composite material.

In some embodiments, the amount of nickel present in the composite material, obtained in step (iii), is 80 wt.% or less, such as 70 wt.% or less, 60 wt.% or less, or 50 wt.% or less, based on the total weight of the composite material. In some embodiments, the amount of nickel present in the composite material, obtained in step (iii), is 20 wt.% or more, 30 wt.% or more, 40 wt.% or more, based on the total weight of the composite material.

The amount of nickel present in the composite material, obtained in step (iii) may be an amount selected from a range with the upper and lower limits selected from the values given above. For example, in some embodiments, nickel is present in the composite material, obtained in step (iii), in an amount from 20 to 80 wt.% based on the total weight of the composite material.

### Preparation of Powdered Composite

The method of the invention may further provide the preparation of powdered composite material.

In some embodiments, the method further comprises the step(s) of:
(iv) after step (iii), removing the composite material from the substrate to obtain a free composite material; and optionally
(v) after step (iv), comminuting the free composite to obtain a powdered composite.

The fourth step (iv) takes place after step (iii) and comprises removing (for example, scraping) the layer of composite material obtained in step (iii) from the substrate to obtain a free composite material, that is, a composite material which is separated from the substrate.

The fifth step (v) takes place after step (iv) and comprises comminuting (i.e. making into particles, for example by grinding, crushing, cutting, vibrating or similar) the free composite material to obtain a powdered composite. Any suitable comminuting technique, mechanical grinding technique or procedure may be used to obtain the powder. For example, grinding using a mortar and pestle may be used to obtain the powdered composite.

The powdered composite may be fixed onto a different substrate to make electrical contact. This allows the catalyst material to be used in a variety of different electrolytic cells for hydrogen production (electrolyzer).

The powdered composites obtained from such embodiments of the invention may be suitable for anion exchange membrane water electrolysis.

For example, powdered composite obtained from such embodiments of the invention may be suitable for use in electrolytic hydrogen production under alkaline proton exchange membrane (PEM) electrolysis conditions.

### The Composite Material

The second aspect of the invention provides a composite material obtained or obtainable by the method of the first aspect of the invention. Accordingly, in a second aspect of the invention, there is provided a composite material, obtained or obtainable by a method of preparing a composite material, the method comprising the steps of:
(i) electrochemically depositing material onto a substrate from a deposition solution comprising a nickel (II) salt and graphene oxide, to obtain a nickel-reduced graphene oxide composite material comprising nickel dispersed on reduced graphene oxide, said composite material being deposited on the substrate;
(ii) after step (i), placing the substrate, having the nickel-reduced graphene oxide composite deposited thereon, in an alkaline solution along with a counter electrode; and
(iii) after step (ii), partially electrochemically oxidising the nickel, to obtain a partially oxidised nickel-reduced graphene oxide composite material comprising partially oxidised nickel dispersed on reduced graphene oxide, said composite material being deposited on the substrate.

Thus, the composite material has a unique microstructure obtained by the electrochemical deposition of step (i) and the partial electrochemical oxidation of step (iii).

The composite material comprises partially oxidised nickel particles dispersed on reduced graphene oxide flakes.

The nickel is in the form of particles, that is, discrete locations of deposition, rather than as a contiguous layer. They can be considered 'islands' of partially oxidised nickel.

The partially oxidised nickel particles may comprise nickel nanoparticles, wherein the nickel nanoparticles comprise metallic Ni and at least one surface phase comprising Ni²⁺ and/or Ni³⁺.

The partially oxidised nickel particles may comprise nickel nanoparticles, wherein the nickel nanoparticles comprise metallic Ni and a plurality of surface phases comprising Ni²⁺ and/or Ni³⁺.

The partially oxidised nickel particles may comprise nickel nanoparticles, wherein the nickel nanoparticles comprise metallic Ni and at least one surface phase selected from Ni(OH)₂, NiOOH, NiO and any combination of two or three thereof, wherein optionally the Ni(OH)₂ is selected from alpha-Ni(OH)₂ and beta-Ni(OH)₂.

The partially oxidised nickel particles may comprise nickel nanoparticles, wherein the nickel nanoparticles comprise metallic Ni and a plurality of surface phases selected from Ni(OH)₂ NiOOH, NiO and any combination of two or three thereof, wherein optionally the Ni(OH)₂ is selected from alpha-Ni(OH)₂ and beta-Ni(OH)₂.

The partially oxidised nickel particles may comprise at least one Ni-Ni²⁺ and/or Ni-Ni³⁺ surface phase interface. Without wishing to be bound by theory, it is thought that at the cathode during alkaline water electrolysis, water dissociation takes place at the Ni | Ni²⁺ and/or Ni | Ni³⁺ surface phase interface. Without wishing to be bound by theory, it is thought that at the anode during alkaline water electrolysis, hydroxyl (OH⁻) dissociation takes place at the Ni | Ni²⁺ and/or Ni | Ni³⁺ surface phase interface.

The nickel nanoparticles may have a wide size distribution. For example, in some embodiments the size distribution of the nickel nanoparticles is 5 to 500 nm.

In some embodiments, the size distribution of the nickel nanoparticles is 50 to 450 nm, wherein optionally the size distribution of the nickel nanoparticles is 100 to 400 nm, wherein optionally the size distribution of the nickel nanoparticles is 200 to 300 nm.

In some embodiments, each nickel particle or island has a maximum diameter of 100 nm or less, such as 90 nm or less, 80 nm or less, 70 nm or less, 60 nm of less, 50 nm or less, 40 nm or less, 30 nm or less, 20 nm or less or 10 nm or less.

Without wishing to be bound by theory, it is thought that smaller nickel particles provide a higher surface-to-volume ratio, thereby providing more active sites per unit mass of nickel.

The reduced graphene oxide is in the form of flakes, that is, particles of low thickness (1-10 layers) and significantly larger diameter.

In some embodiments, each flake of reduced graphene oxide has a diameter of from 1 to 50 µm.

In some embodiments, each flake of reduced graphene oxide has a diameter of from 1 to 25 µm,

In some embodiments, each flake of reduced graphene oxide has a diameter of from 1 to 10 µm.

The composite material may be formed of a single layer comprising partially oxidised nickel particles dispersed on reduced graphene oxide flakes.

The composite material may be formed of a first layer comprising reduced graphene oxide flakes and a second layer comprising partially oxidised nickel particles dispersed on the first layer.

The composite material may comprise partially oxidised nickel particles dispersed over sheets of reduced graphene oxide.

The composite material may comprise of a foam layer.

In some embodiments, nickel is present in the composite in an amount from 20 to 80 wt.% based on the total weight of the composite material.

In some embodiments, the amount of nickel present in the composite material is 80 wt.% or less, such as 70 wt.% or less, 60 wt.% or less, or 50 wt.% or less, based on the total weight of the composite material.

In some embodiments, the amount of nickel present in the composite material is 20 wt.% or more, 30 wt.% or more, 40 wt.% or more, based on the total weight of the composite material.

The amount of nickel present in the composite material may be an amount selected from a range with the upper and lower limits selected from the values given above. For example, in some embodiments, nickel is present in the composite material in an amount from 20 to 80 wt.% based on the total weight of the composite material.

In some embodiments, the thickness of the composite material is from 5 to 30 µm.

In some embodiments, the thickness of the composite material is from 10 to 25 nm, wherein optionally the thickness of the composite material is from 15 to 20 nm.

### The Electrode

The third aspect of the invention provides an electrode comprising a composite material, obtained or obtainable by the method of the first aspect of the invention, or comprising a composite material of the second aspect of the invention. The electrode suitably therefore comprises a composite material comprising partially oxidised nickel particles dispersed on reduced graphene oxide, deposited on a substrate which is electrically conductive.

The electrode may be for use as an electrode for electrolytic hydrogen production under alkaline electrolysis conditions.

The electrode may be for use as a cathode for electrolytic hydrogen production under alkaline electrolysis conditions.

The electrode may be for use as an anode for electrolytic oxygen production under alkaline electrolysis conditions. The electrode may be for use as an anode for electrolytic urea oxidation under urea-oxidation assisted alkaline electrolysis conditions.

To enable this, the substrate material is suitably electrically conductive.

In some embodiments, the substrate comprises nickel or titanium.

In preferred embodiments, the substrate comprises titanium.

In some embodiments, the substrate is a titanium network. In some embodiments, the substrate is a titanium mesh. In some embodiments, the substrate is a titanium grid.

In some embodiments, the substrate contains no, or at most trace amounts, of nickel. For example, it may be at most 10 wt.% nickel, at most 5 wt.% nickel, at most 2 wt.% nickel, at most 1 wt.% nickel or even at most 0.5 wt.% nickel.

In some embodiments, the substrate is a nickel network. In some embodiments, the substrate is a nickel mesh. In some embodiments, the substrate is a nickel grid. In some embodiments, the substrate is a nickel foam. In some embodiments, the substrate is a nickel perforated sheet.

In some embodiments, the thickness of the substrate is from 50 to 400 µm, wherein optionally the thickness of the substrate is from 100 to 150 µm.

In some embodiments, nickel is present in the electrode is an amount from 20 to 80 wt.% based on the total weight of the composite material.

In some embodiments, the amount of nickel present in the electrode is 80 wt.% or less, such as 70 wt.% or less, 60 wt.% or less, or 50 wt.% or less, based on the total weight of the composite material. In some embodiments, the amount of nickel present in the electrode is 20 wt.% or more, 30 wt.% or more, 40 wt.% or more, based on the total weight of the composite material.

The amount of nickel present in the electrode may be an amount selected from a range with the upper and lower limits selected from the values given above. For example, in some embodiments, nickel is present in the composite material, obtained in step (iii), in an amount from 20 to 80 wt.% based on the total weight of the composite material.

In some embodiments, the electrode comprises a substrate at least partially covered in a foam layer of the present composite material.

In some embodiments, the electrode comprises a substrate at least partially covered in a plurality of foam layers of the present composite material.

In some embodiments, the electrode comprises a substrate substantially covered in a foam layer of the present composite material.

In some embodiments, the electrode may comprise a substrate substantially covered in a plurality of foam layers of the present composite material.

### Electrolytic Hydrogen Production - Method

The fourth aspect of the invention provides a method of electrolytic hydrogen production under alkaline electrolysis conditions, the method comprising the steps of:
(A) setting up a system comprising an aqueous alkaline solution, a first electrode comprising a composite material according to the second aspect of the invention, a second electrode, and an ion-permeable diaphragm placed between the first and second electrode; and
(B) applying a current between the first electrode and the second electrode to generate hydrogen at the first electrode.

### Step (A) - Set-Up

The first step (A) comprises setting up a system in an alkaline solution. Thus, the electrolytic hydrogen production takes place under alkaline conditions.

The aqueous alkaline solution of step (A) may be the same solution as the alkaline solution of step (ii) in the method of the first aspect of the invention.

In some embodiments, the concentration of the aqueous alkaline solution of step (A) is from 0.1 to 5 mol dm⁻³, preferably from 0.2 to 2 mol dm⁻³, more preferably from 0.5 to 1.5 mol dm⁻³, for example about 1 mol dm⁻³.

The pH of the aqueous alkaline solution of step (A) is a value greater than 7.0 and equal to or below 14.0.

In some embodiments, the pH of the aqueous alkaline solution of step (A) is a value from 8.0 to 14.0, preferably from 9.0 to 14, more preferably from 10.0 to 14.0, for example about 14.0.

The first electrode comprises a composite material according to the second aspect of the invention.

In some embodiments, the first electrode is an electrode according to the third aspect of the invention. The first electrode may be a cathode.

The second electrode acts as a counter electrode to the first electrode. The second electrode may be an anode.

In some embodiments, the second electrode comprises a composite material according to the second aspect of the invention, or is an electrode according to the third aspect of the invention.

In preferred embodiments, the second electrode comprises nickel.

In preferred embodiments, the second electrode is nickel foam.

The system of step (A) also comprises an ion-permeable diaphragm placed between the first and second electrode.

The ion-permeable diaphragm separates the first and second electrode. The diaphragm also separates the product gases produced at the first and second electrode, respectively, and prevents undesirable by-reactions from occurring.

The ion-permeable diaphragm allows the passage/migration of ions between the first and second electrode. Thus, the diaphragm is porous and selective to ions.

In some embodiments, the ion-permeable diaphragm comprises nickel oxide or Zirfon^{®}.

As described herein, the system of step (A) may also be referred to as an electrolytic cell for hydrogen production (electrolyzer).

### Step (B) - Production of Hydrogen

The second step (B) takes place after the first step (A).

Step (B) comprises applying a current between the first electrode and the second electrode. Hydrogen is then generated at the first electrode.

Step (B) may be carried out in a system in which the first electrode is connected to the negative pole of a power source, and the second electrode is connected to the positive pole of the power source. The power source may be a DC voltage source.

Without wishing to be bound by theory, it is thought that during step (B), the hydrogen evolution reaction (HER) takes place at the first electrode, while the oxygen evolution reaction (OER) takes place at the second electrode.

At the first electrode, the HER mechanism initiates with a Volmer step (1), wherein H₂O within the aqueous alkaline solution dissociates to produce OH⁻ ions and the intermediate species H which adsorbs onto the composite material on the surface of the first electrode (H_{ads}):

H₂O + e⁻ + * → 2H_{ads} + OH- (1),

wherein * signifies an unoccupied active site on the composite material's surface, such as free Ni active sites.

The composite material also comprises surface phases of Ni²⁺ and/or Ni³⁺. H formed in (1) do not adsorb at these surface phases of Ni²⁺ and/or Ni³⁺. Without wishing to be bound by theory, it is thought that during step (B), water dissociation (1) takes place at the Ni | Ni²⁺ and/or Ni | Ni³⁺ surface phase interface. H adsorbs on to metallic Ni, while OH⁻ from H₂O goes to the Ni²⁺ surface phase sites. As the Ni²⁺ and/or Ni³⁺ surface phases provide strong binding for OH⁻, the water dissociation barrier is reduced (lowered) according to Bronsted-Polanyi relations. Therefore, the efficiency of the water dissociation step (1) is improved.

The intermediate species H_{ads} is then subsequently eliminated from the surface of the composite material *via* either the Tafel reaction (2) or the Heyrovsky reaction (3):

H_{ads} + H_{ads} → H₂ + 2* (2)

H₂O + H_{ads} + e⁻ → H₂ + OH- + * (3)

wherein * signifies an unoccupied active site on the composite material's surface, such as free Ni active sites.

Thus, hydrogen is produced at the first electrode during step (B). The overall reaction at the first electrode is represented by the following equation (4):

2H₂O + 2e- → H₂ + OH⁻ (4)

Without wishing to be bound by theory, it is thought that H atoms that adsorb onto Ni active sites upon water dissociation during alkaline water electrolysis may spill on to the reduced graphene oxide (rGO) which serves as a H atom acceptor. This provides free Ni active sites which are required for the hydrogen evolution reaction (HER) to proceed. Additionally, the H atom spillover from the Ni active sites to rGO may also provide an additional pathway for hydrogen production (that is, in addition to (2) and (3)). This contributes to the overall production of hydrogen, thus increasing the catalyst's efficiency.

In parallel, OH⁻ ions in the aqueous alkaline solution and generated at the first electrode (1), may diffuse across the ion-permeable diaphragm to the second electrode. It is thought that the overall OER mechanism at the second electrode proceeds *via* the following equation (5):

2OH⁻→ H₂O + ½ O₂ + 2e⁻ (5)

Thus, oxygen may be produced at the second electrode.

As such, the overall equation for the electrolytic cell may be represented as equation (6):

H₂O → H₂ + ½ O₂ (6)

In some embodiments, step (B) is performed at temperature selected from 50 to 90 °C, preferably from 60 to 80 °C, more preferably from 70 to 80 °C, for example about 75 °C.

It is understood within the field that the theoretical minimum energy for the hydrogen evolution reaction (i.e., the process represented by equation (4) above) is 1.23 V in a two-electrode system (that is - a system comprising a cathode and an anode), or 0 V towards a Reversible Hydrogen Electrode. However, experimentally, additional energy (known as the cell overpotential) is required due to the polarization overpotential of the cathode and anode, and the internal resistance of the electrolyte. As such, the experimental minimum energy for the hydrogen evolution reaction is more negative (indicating a loss of energy). Catalysts are therefore employed to reduce this energy loss.

The first electrode comprises a composite material according to the second aspect of the invention.

The composite material of the second aspect may be used as a catalyst for hydrogen production under alkaline electrolysis conditions. Without wishing to be bound by theory, use of the composite material may result in a reduction of energy loss at the first electrode during step (B) due to the synergistic effect caused by the unique microstructures generated by the methods of the present invention.

A reference electrode may be used in addition to the first and second electrode to measure the working electrode potential. Thus, electrolytic hydrogen production may be conducted using a three-electrode system. The reference electrode may be used to measure the potential of the half cell at first electrode.

For example, in some embodiments, step (B) is performed at a voltage of from -4.00 V to 0.00 V, preferably from -3.00 V to 0.00 V, more preferably from -1.00 V to 0.00 V, even more preferably from - 0.40 V to 0.00 V towards a reference electrode.

In some embodiments, step (B) is performed at a voltage equivalent to a voltage of from of from -4.00 V to 0.00 V, preferably from -3.00 V to 0.00 V, more preferably from -1.00 V to 0.00 V, even more preferably from -0.40 V to 0.00 V towards a Reference Hydrogen Electrode.

That is, the voltage may be chosen dependent on the identity of the reference electrode. As many different reference electrodes can be envisaged, leading to a variety of suitable 'absolute' voltages, it can be useful to discuss the voltage in terms of what the effective potential difference *would be* were the reference electrode to be a Reversible Hydrogen Electrode. That is not to say that said Reversible Hydrogen Electrode is necessarily present in embodiments of the invention; it is merely a useful reference point against which voltages can be assessed. Herein voltage is sometimes therefore discussed in terms of a voltage "equivalent to" a voltage towards a Reversible Hydrogen Electrode. The potential may be recalculated to be towards a Reversible Hydrogen Electrode from any other reference electrode. Other reference electrodes may include a Saturated Calomel Electrode.

Of course, in some embodiments the reference electrode may be a Reversible Hydrogen Electrode.

In some embodiments, step (B) is performed at a voltage of from of from -4.00 V to 0.00 V, preferably from -3.00 V to 0.00 V, more preferably from -1.00 V to 0.00 V, even more preferably from -0.40 V to 0.00 V towards a Reversible Hydrogen Electrode.

Additionally, use of the composite material in the first electrode may result a higher hydrogen evolution current for a fixed voltage.

For example, in some embodiments, the composite material demonstrates a hydrogen evolution current of up to 100 mA cm⁻², for example up to 200 mA cm⁻² or up to 300 mA cm⁻², or up to 400 mA cm⁻², or up to 500 mA cm⁻², at a voltage equivalent to a voltage of -0.35 V against a Reversible Hydrogen Electrode, during performance of step (B).

In some embodiments, the composite material demonstrates a hydrogen evolution current of up to 100 mA cm⁻², for example up to 200 mA cm⁻² or up to 300 mA cm⁻², or up to 400 mA cm⁻², or up to 500 mA cm⁻², at -0.35 V against a Reversible Hydrogen Electrode, during performance of step (B).

Thus, the composite material of the invention may demonstrate high catalytic activity for electrolytic hydrogen production under alkaline water electrolysis conditions. This may be the case, even when the substrate (on which the composite is deposited) does not contain any, or at most trace amounts, of nickel.

In some embodiments, step (B) is performed at a pressure of from 1 to 30 bars.

In some embodiments, the method further comprises the step of:
(C) partially electrochemically oxidising the first electrode, step (C) being performed periodically during the conduction of step (B),
wherein optionally step (C) is performed periodically at intervals of from 50 to 5400 seconds and/or each performance of step (C) is for a duration of from 0.5 to 100 seconds.

Thus, step (C) is an optional step that may be performed periodically during the conduction step (B). The partial oxidation of step (C) may be performed in a similar way as the partial electrochemical oxidation of step (iii) of the method of the first aspect of the invention. Thus, during step (C), the surface phases of Ni²⁺ and/or Ni³⁺ on the composite material may be renewed periodically.

After each performance of step (C), the hydrogen evolution current may be returned to the initial value (that is, of step (B)).

This allows the catalytic activity of the ox-Ni@rGO to be maintained during electrolytic hydrogen evolution under alkaline electrolysis conditions. The oxidation step acts to 'top up' the oxidation level of the partially oxidised nickel on the rGO.

In some embodiments, the partial electrochemical oxidation of step (C) is performed at a voltage of from 0 V to 2 V towards the reference electrode.

For example, the partial electrochemical oxidation of step (C) may be performed at a voltage equivalent to a voltage of from 0 V to 2 V towards a Reversible Hydrogen Electrode.

In some embodiments, the partial electrochemical oxidation of step (C) is performed at a voltage of from 0.3 V to 1.5 V, preferably from 0.5 V to 1.2 V, more preferably 0.6 V to 1.1 V, for example about 1 V, towards the reference electrode.

For example, the partial oxidation of step (C) may be performed at a voltage equivalent to a voltage of from 0.3 V to 1.5 V, preferably from 0.5 V to 1.2 V, more preferably 0.6 V to 1.1 V, for example at a voltage equivalent to a voltage of about 1 V, towards a Reversible Hydrogen Electrode.

In some embodiments, the partial electrochemical oxidation of step (C) may be performed at a voltage of from 0 V to 2 V towards a Reversible Hydrogen Electrode.

In some embodiments, the partial electrochemical oxidation of step (C) may be performed at a voltage of from 0.3 V to 1.5 V, preferably from 0.5 V to 1.2 V, more preferably 0.6 V to 1.1 V, for example about 1 V, towards a Reversible Hydrogen Electrode.

In some embodiments, step (C) is performed periodically at intervals of from 50 to 5400 seconds.

In some embodiments, step (C) is performed periodically at intervals of from 100 to 5000 seconds.

Preferably, in some embodiments, step (C) is performed periodically at intervals of from 150 to 1000 seconds, more preferably from 200 to 500 seconds, for example about 240 seconds.

In some embodiments, each performance of step (C) is for a duration of from 0.5 to 100 seconds.

Preferably, in some embodiments, each performance of step (C) is for a duration of from 1 to 50 seconds, more preferably 5 to 25 seconds, for example about 10 seconds.

Additionally, the overpotential for the hydrogen evolution reaction may be reduced by 0.2 V compared to a composite material comprising only Ni.

The voltage stability estimation of the first electrode may be measured by performing step (B) at a constant current for an extended duration and measuring the voltage decrease rate, that is, the negative voltage change per unit of time.

Generally, a high-surface area Ni electrode demonstrates a potential decrease rate of over -500 mV/month at a constant current of 100 mA cm⁻².

In some embodiments, the first electrode demonstrates a voltage decrease rate of less than -500 mV/month, for example less than -400 mV/month, or less than -300 mV/month, or less than -200 mV/month, or less than -100 mV/month, at a constant current of 100 mA cm⁻².

In preferred embodiments, the first electrode demonstrates a potential decrease rate of less than -100 mV/month, more preferably less than -50 mV/month, for example -30 mV/month, at a constant current of 100 mA cm⁻².

Thus, the composite material may provide the first electrode with improved voltage stability.

### Electrolytic Oxygen Production - Method

The fifth aspect of the invention provides a method of electrolytic oxygen production under alkaline electrolysis conditions, the method comprising the steps of:
(A) setting up a system comprising an aqueous alkaline solution, a first electrode, a second electrode comprising a composite material according to the second aspect of the invention, and an ion-permeable diaphragm placed between the first and second electrode; and
(B) applying a current between the first electrode and the second electrode to generate oxygen at the second electrode.

In some embodiments, the second electrode is an electrode according to the third aspect of the invention. The second electrode may be an anode.

### Step (A) - Set-Up

The first step (A) comprises setting up a system in an alkaline solution. Thus, the electrolytic oxygen production takes place under alkaline conditions.

The aqueous alkaline solution of step (A) may be the same solution as the alkaline solution of step (ii) in the method of the first aspect of the invention.

In some embodiments, the concentration of the aqueous alkaline solution of step (A) is from 0.1 to 5 mol dm⁻³, preferably from 0.2 to 2 mol dm⁻³, more preferably from 0.5 to 1.5 mol dm⁻³, for example about 1 mol dm⁻³.

The pH of the aqueous alkaline solution of step (A) is a value greater than 7.0 and equal to or below 14.0.

In some embodiments, the pH of the aqueous alkaline solution of step (A) is a value from 8.0 to 14.0, preferably from 9.0 to 14, more preferably from 10.0 to 14.0, for example about 14.0.

The second electrode comprises a composite material according to the second aspect of the invention.

In some embodiments, the second electrode is an electrode according to the third aspect of the invention. The second electrode may be an anode.

The first electrode acts as a counter electrode to the second electrode. The first electrode may be a cathode.

In preferred embodiments, the first electrode comprises a composite material according to the second aspect of the invention or is an electrode according to the third aspect of the invention.

In preferred embodiments, the first electrode comprises nickel.

In some embodiments, the first electrode is nickel foam. In some embodiments, the first electrode is nickel mesh. In some embodiments, the first electrode is a nickel perforated sheet.

The system of step (A) also comprises an ion-permeable diaphragm placed between the first and second electrode.

The ion-permeable diaphragm separates the first and second electrode. The diaphragm also separates the product gases produced at the first and second electrode, respectively, and prevents undesirable by-reactions from occurring.

The ion-permeable diaphragm allows the passage/migration of ions between the first and second electrode. Thus, the diaphragm is porous and selective to ions.

In some embodiments, the ion-permeable diaphragm comprises Zirfon^{®}.

As described herein, the system of step (A) may also be referred to as an electrolytic cell for oxygen production (electrolyzer).

### Step (B) - Production of Oxygen

The second step (B) according to the fifth aspect of the invention is the same as step (B) according to the fourth aspect of the invention. The second step (B) takes place after the first step (A).

Step (B) comprises applying a current between the first electrode and the second electrode. Oxygen is then generated at the second electrode.

OH⁻ ions in the aqueous alkaline solution and generated at the first electrode (1), may diffuse across the ion-permeable diaphragm to the second electrode. It is thought that the overall OER mechanism at the second electrode proceeds *via* the following equation (5):

2OH⁻ → H₂O + ½ O₂ + 2e⁻ (5)

Thus, oxygen may be produced at the second electrode.

Without wishing to be bound by theory, it is thought that the high OER activity is a consequence of a combined effect of rGO, which serves as a conductive and stable support for partially oxidized nickel particles, and the interfacial reactions between the metallic nickel and oxidized nickel phases that facilitates the splitting of water and hydroxyl ions and recombination to O₂. As such, the overall equation for the electrolytic cell may be represented as equation (6):

H₂O → H₂ + ½ O₂ (6)

In some embodiments, step (B) is performed at temperature selected from 50 to 90 °C, preferably from 60 to 80 °C, more preferably from 70 to 80 °C, for example about 75 °C.

It is understood within the field that the theoretical minimum energy for the oxygen evolution reaction (i.e., the process represented by equation (5) above) is 1.23 V in a two-electrode system (that is - a system comprising a cathode and an anode), or 0 V towards a Reversible Hydrogen Electrode. However, experimentally, additional energy (known as the cell overpotential) is required due to the polarization overpotential of the cathode and anode, and the internal resistance of the electrolyte. As such, the experimental minimum energy for the oxygen evolution reaction is more negative (indicating a loss of energy). Catalysts are therefore employed to reduce this energy loss.

The second electrode comprises a composite material according to the second aspect of the invention.

The composite material of the second aspect may be used as a catalyst for oxygen production under alkaline electrolysis conditions. Without wishing to be bound by theory, use of the composite material may result in a reduction of energy loss at the second electrode during step (B) due to the synergistic effect caused by the unique microstructures generated by the methods of the present invention.

A reference electrode may be used in addition to the first and second electrode to measure the working electrode potential. Thus, electrolytic oxygen production may be conducted using a three-electrode system. The reference electrode may be used to measure the potential of the half cell at the second electrode.

For example, in some embodiments, step (B) is performed at a voltage of from 1.00 V to 4.00 V, preferably from 1.00 V to 3.00 V, more preferably from 1.00 V to 2.50 V, even more preferably from 1.00 V to 2.00 V towards a reference electrode.

In some embodiments, step (B) is performed at a voltage equivalent to a voltage of from of from 1.23 V to 4.00 V, preferably from 1.23 V to 3.00 V, more preferably from 1.23 V to 2.50 V, even more preferably from 1.23 V to 2.00 V towards a Reference Hydrogen Electrode.

That is, the voltage may be chosen dependent on the identity of the reference electrode. As many different reference electrodes can be envisaged, leading to a variety of suitable 'absolute' voltages, it can be useful to discuss the voltage in terms of what the effective potential difference *would be* were the reference electrode to be a Reversible Hydrogen Electrode. That is not to say that said Reversible Hydrogen Electrode is necessarily present in embodiments of the invention; it is merely a useful reference point against which voltages can be assessed. Herein voltage is sometimes therefore discussed in terms of a voltage "equivalent to" a voltage towards a Reversible Hydrogen Electrode. The potential may be recalculated to be towards a Reversible Hydrogen Electrode from any other reference electrode. Other reference electrodes may include a Saturated Calomel Electrode.

Of course, in some embodiments the reference electrode may be a Reversible Hydrogen Electrode.

In some embodiments, step (B) is performed at a voltage of from of from 1.23 V to 4.00 V, preferably from 1.23 V to 3.00 V, more preferably from 1.23 V to 2.50 V, even more preferably from 1.23 V to 2.00 V towards a Reversible Hydrogen Electrode.

Additionally, use of the composite material in the second electrode may result a higher oxygen evolution current for a fixed voltage.

For example, in some embodiments, the composite material demonstrates an oxygen evolution current of up to 50 mA cm⁻², for example up to 100 mA cm⁻² or up to 150 mA cm⁻², or up to 200 mA cm⁻² at a voltage equivalent to a voltage of 1.6 V against a Reversible Hydrogen Electrode, during performance of step (B).

In some embodiments, the composite material demonstrates an oxygen evolution current of up to 50 mA cm⁻², for example up to 100 mA cm⁻² or up to 150 mA cm⁻², or up to 200 mA cm⁻² at 1.6 V against a Reversible Hydrogen Electrode, during the performance of step (B).

Thus, the composite material of the invention may demonstrate high catalytic activity for electrolytic oxygen production under alkaline water electrolysis conditions. This may be the case, even when the substrate (on which the composite is deposited) does not contain any, or at most trace amounts, of nickel.

In some embodiments, the method further comprises the step of:
(C) partially electrochemically oxidising the second electrode, step (C) being performed periodically during the conduction of step (B),
wherein optionally step (C) is performed periodically at intervals of from 50 to 5400 seconds and/or each performance of step (C) is for a duration of from 0.5 to 100 seconds.

Thus, step (C) is an optional step that may be performed periodically during the conduction step (B). The partial oxidation of step (C) may be performed in a similar way as the partial electrochemical oxidation of step (iii) of the method of the first aspect of the invention. Thus, during step (C), the surface phases of Ni²⁺ and/or Ni³⁺ on the composite material may be renewed periodically.

After each performance of step (C), the oxygen evolution current may be returned to the initial value (that is, of step (B)).

This allows the catalytic activity of the ox-Ni@rGO to be maintained during electrolytic oxygen evolution under alkaline electrolysis conditions. The oxidation step acts to 'top up' the oxidation level of the partially oxidised nickel on the rGO.

In some embodiments, the partial electrochemical oxidation of step (C) is performed at a voltage of from 0 V to 2 V towards the reference electrode.

For example, the partial electrochemical oxidation of step (C) may be performed at a voltage equivalent to a voltage of from 0 V to 2 V towards a Reversible Hydrogen Electrode.

In some embodiments, the partial electrochemical oxidation of step (C) is performed at a voltage of from 0.3 V to 1.5 V, preferably from 0.5 V to 1.2 V, more preferably 0.6 V to 1.1 V, for example about 1 V, towards the reference electrode.

For example, the partial oxidation of step (C) may be performed at a voltage equivalent to a voltage of from 0.3 V to 1.5 V, preferably from 0.5 V to 1.2 V, more preferably 0.6 V to 1.1 V, for example at a voltage equivalent to a voltage of about 1 V, towards a Reversible Hydrogen Electrode.

In some embodiments, the partial electrochemical oxidation of step (C) may be performed at a voltage of from 0 V to 2 V towards a Reversible Hydrogen Electrode.

In some embodiments, the partial electrochemical oxidation of step (C) may be performed at a voltage of from 0.3 V to 1.5 V, preferably from 0.5 V to 1.2 V, more preferably 0.6 V to 1.1 V, for example about 1 V, towards a Reversible Hydrogen Electrode.

In some embodiments, step (C) is performed periodically at intervals of from 50 to 5400 seconds.

In some embodiments, step (C) is performed periodically at intervals of from 100 to 5000 seconds.

Preferably, in some embodiments, step (C) is performed periodically at intervals of from 150 to 1000 seconds, more preferably from 200 to 500 seconds, for example about 240 seconds.

In some embodiments, each performance of step (C) is for a duration of from 0.5 to 100 seconds.

Preferably, in some embodiments, each performance of step (C) is for a duration of from 1 to 50 seconds, more preferably 5 to 25 seconds, for example about 10 seconds.

### Urea oxidation-assisted water electrolysis - Method

The aqueous alkaline solution of step (A) may also comprise urea. This allows electrolytic urea oxidation to be conducted under urea oxidation-assisted water electrolysis conditions.

Thus, the sixth aspect of the invention provides a method of electrolytic urea oxidation (that is, suitably, of nitrogen and carbon dioxide production) under urea oxidation-assisted water electrolysis conditions, the method comprising the steps of:
(A) setting up a system comprising a solution comprising an aqueous alkaline solution and urea, a first electrode, a second electrode comprising a composite material according to the second aspect of the invention, and an ion-permeable diaphragm placed between the first and second electrode; and
(B) applying a current between the first electrode and the second electrode to oxidise urea (that is, suitably, to generate nitrogen and carbon dioxide) at the second electrode.

Thus, in some embodiments, the invention provides a method of electrolytic nitrogen and carbon dioxide production under urea oxidation-assisted water electrolysis conditions, the method comprising the steps of:
(A) setting up a system comprising a solution comprising an aqueous alkaline solution and urea, a first electrode, a second electrode comprising a composite material according to the second aspect of the invention, and an ion-permeable diaphragm placed between the first and second electrode; and
(B) applying a current between the first electrode and the second electrode to generate nitrogen and carbon dioxide at the second electrode.

In some embodiments, the second electrode is an electrode according to the third aspect of the invention. The second electrode may be an anode.

### Step (A) - Set-Up

The first step (A) comprises setting up a system in an alkaline solution. Thus, the electrolytic urea oxidation takes place under alkaline conditions.

In some embodiments, the concentration of the alkaline solution of step (A) is from 0.1 to 6 mol dm⁻³, preferably from 0.3 to 3 mol dm⁻³, more preferably from 0.5 to 1.5 mol dm⁻³, for example about 1 mol dm⁻³.

The pH of the alkaline solution of step (A) is a value greater than 7.0 and equal to or below 14.0.

In some embodiments, the pH of the alkaline solution of step (A) is a value from 8.0 to 14.0, preferably from 9.0 to 14.0, more preferably from 10.0 to 14.0, for example about 14.0.

In some embodiments, the alkaline solution of step (A) is selected from a potassium hydroxide solution (KOH)_{aq}, a sodium hydroxide solution (NaOH)_{aq}, a lithium hydroxide solution (LiOH)_{aq}, and a combination of any two or three thereof.

In preferred embodiments, the alkaline solution of step (A) is a potassium hydroxide solution (KOH)_{aq}.

In some embodiments, the concentration of urea of step (A) is from 0.5 to 10 mol dm⁻³, preferably from 1 to 5 mol dm⁻³, more preferably from 2 to 4 mol dm⁻³, for example about 3 mol dm⁻³.

In preferred embodiments, the solution of step (A) comprises potassium hydroxide solution (KOH)_{aq} and urea, wherein the concentration of the potassium hydroxide solution (KOH)_{aq} is about 1 mol dm⁻³ and the concentration of urea is about 3 mol dm⁻³.

The first electrode acts as a counter electrode to the second electrode. The first electrode may be a cathode.

In preferred embodiments, the first electrode is an electrode according to the third aspect of the invention.

In preferred embodiments, the first electrode comprises nickel.

In some embodiments, the first electrode is nickel foam. In some embodiments, the first electrode is nickel mesh. In some embodiments, the first electrode is a nickel perforated sheet. The system of step (A) also comprises an ion-permeable diaphragm placed between the first and second electrode.

The ion-permeable diaphragm separates the first and second electrode. The diaphragm also separates the product gases produced at the first and second electrode, respectively, and prevents undesirable by-reactions from occurring.

The ion-permeable diaphragm allows the passage/migration of ions between the first and second electrode. Thus, the diaphragm is porous and selective to ions.

In some embodiments, the ion-permeable diaphragm comprises nickel oxide or Zirfon^{®}.

As described herein, the system of step (A) may also be referred to as an electrolytic cell for urea oxidation (electrolyzer).

### Step (B) - Urea Oxidation

The second step (B) takes place after the first step (A).

Step (B) comprises applying a current between the first electrode and the second electrode. Urea is then oxidized at the second electrode. That is, suitably, nitrogen and carbon dioxide may be generated at the second electrode. Oxygen may also be generated at the second electrode,

Step (B) may be carried out in a system in which the first electrode is connected to the negative pole of a power source, and the second electrode is connected to the positive pole of the power source. The power source may be a DC voltage source.

Without wishing to be bound by theory, it is thought that during step (B), the hydrogen evolution reaction (HER) takes place at the first electrode, while urea oxidation takes place at the second electrode.

At the first electrode, the overall HER mechanism is represented by the following equation:

2H₂O + 2e- → H₂ + 2OH⁻ (7),

In parallel, Urea and OH⁻ ions in the aqueous alkaline solution generated at the first electrode (7), may diffuse across the ion-permeable diaphragm to the second electrode.

It is thought that the overall urea oxidation-assisted water electrolysis mechanism at the second electrode proceeds *via* the following equation (8):

CO(NH₂)₂ + 6OH⁻ → N₂ + 5H₂O + CO₂ + 6e⁻ (8)

Thus, nitrogen and carbon dioxide may be produced at the second electrode.

Without wishing to be bound by theory, it is thought that the unique microstructure of the composite electrode boosts urea oxidation reaction, which is additionally augmented by reduced graphene oxide, serving as an efficient current collector.

As such, the overall equation for the electrolytic cell may be represented as equation (9):

CO(NH₂)₂ + H₂O → N₂ + 3H₂ + CO₂ (9)

Additionally, OH⁻ ions in the aqueous alkaline solution and generated at the first electrode may diffuse across the ion-permeable diaphragm to the second electrode where OER may also take place. Thus, oxygen may also be produced at the second electrode.

In some embodiments, step (B) is performed at temperature selected from 50 to 90 °C, preferably from 60 to 80 °C, more preferably from 70 to 80 °C, for example about 75 °C.

It is understood within the field that the theoretical minimum energy for the urea oxidation-assisted water electrolysis (i.e., the process represented by equation (9) above) is 0.37 V in a two-electrode system (that is - a system comprising a cathode and an anode) towards a Reversible Hydrogen Electrode (RHE). However, experimentally, additional energy (known as the cell overpotential) is required due to the polarization overpotential of the cathode and anode, and the internal resistance of the electrolyte. As such, the experimental minimum energy for urea oxidation-assisted water electrolysis more negative (indicating a loss of energy). Catalysts are therefore employed to reduce this energy loss.

The second electrode comprises a composite material according to the second aspect of the invention.

The composite material of the second aspect may be used as a catalyst for urea oxidation under urea oxidation-assisted water electrolysis conditions. Without wishing to be bound by theory, use of the composite material may result in a reduction of energy loss at the second electrode during step (B) due to the synergistic effect caused by the unique microstructures generated by the methods of the present invention.

A reference electrode may be used in addition to the first and second electrode to measure the working electrode potential. Thus, urea oxidation may be conducted using a three-electrode system. The reference electrode may be used to measure the potential of the half cell at the second electrode.

For example, in some embodiments, step (B) is performed at a voltage of from 0.00 V to 4.00 V, preferably from 0.00 V to 3.00 V, more preferably from 0.00 V to 2.50 V, even more preferably from 0.00 V to 2.00 V towards a reference electrode.

In some embodiments, step (B) is performed at a voltage equivalent to a voltage of from of from 1.00 V to 4.00 V, preferably from 1.00 V to 2.50 V, more preferably from 1.00 V to 2.30 V, even more preferably from 1.00 V to 1.90 V towards a Reversible Hydrogen Electrode.

That is, the voltage may be chosen dependent on the identity of the reference electrode. As many different reference electrodes can be envisaged, leading to a variety of suitable 'absolute' voltages, it can be useful to discuss the voltage in terms of what the effective potential difference *would be* were the reference electrode to be a Reversible Hydrogen Electrode. That is not to say that said Reversible Hydrogen Electrode is necessarily present in embodiments of the invention; it is merely a useful reference point against which voltages can be assessed. Herein voltage is sometimes therefore discussed in terms of a voltage "equivalent to" a voltage towards a Reversible Hydrogen Electrode. The potential may be recalculated to be towards a Reversible Hydrogen Electrode from any other reference electrode. Other reference electrodes may include a Saturated Calomel Electrode.

Of course, in some embodiments the reference electrode may be a Reversible Hydrogen Electrode.

In some embodiments, step (B) is performed at a voltage of from of from 1.00 V to 4.00 V, preferably from 1.00 V to 2.50 V, more preferably from 1.00 V to 2.30 V, even more preferably from 1.00 V to 1.90 V towards a Reversible Hydrogen Electrode.

Additionally, use of the composite material in the second electrode may result in a higher urea oxidation current for a fixed voltage. For example, the first electrode may result in a higher nitrogen and carbon dioxide current for a fixed voltage. The use of the composite material in the second electrode may also result in a higher oxygen evolution current for a fixed voltage.

For example, in some embodiments, the composite material demonstrates a urea oxidation current of up to 100 mA cm⁻², for example up to 150 mA cm⁻² or up to 200 mA cm⁻², or up to 300 mA cm⁻² , or up to 325 mA cm⁻² at a voltage equivalent to a voltage of 1.9 V against a Reversible Hydrogen Electrode, during performance of step (B).

In some embodiments, the composite material demonstrates a urea oxidation current of up to 100 mA cm⁻², for example up to 150 mA cm⁻² or up to 200 mA cm⁻², or up to 300 mA cm⁻², or up to 325 mA cm⁻² at 1.9 V against a Reversible Hydrogen Electrode, during performance of step (B).

Thus, the composite material of the invention may demonstrate high catalytic activity for electrolytic urea oxidation under urea oxidation-assisted water electrolysis conditions. This may be the case, even when the substrate (on which the composite is deposited) does not contain any, or at most trace amounts, of nickel.

In some embodiments, the method further comprises the step of:
(C) partially electrochemically oxidising the second electrode, step (C) being performed periodically during the conduction of step (B),
wherein optionally step (C) is performed periodically at intervals of from 50 to 5400 seconds and/or each performance of step (C) is for a duration of from 0.5 to 100 seconds.

Thus, step (C) is an optional step that may be performed periodically during the conduction step (B). The partial oxidation of step (C) may be performed in a similar way as the partial electrochemical oxidation of step (iii) of the method of the first aspect of the invention. Thus, during step (C), the surface phases of Ni²⁺ and/or Ni³⁺ on the composite material may be renewed periodically.

After each performance of step (C), the urea oxidation current may be returned to the initial value (that is, of step (B)).

This allows the catalytic activity of the ox-Ni@rGO to be maintained during under urea oxidation-assisted water electrolysis conditions. The oxidation step acts to 'top up' the oxidation level of the partially oxidised nickel on the rGO.

In some embodiments, the partial electrochemical oxidation of step (C) is performed at a voltage of from 0 V to 2 V towards the reference electrode.

For example, the partial electrochemical oxidation of step (C) may be performed at a voltage equivalent to a voltage of from 0 V to 2 V towards a Reversible Hydrogen Electrode.

In some embodiments, the partial electrochemical oxidation of step (C) is performed at a voltage of from 0.3 V to 1.5 V, preferably from 0.5 V to 1.2 V, more preferably 0.6 V to 1.1 V, for example about 1 V, towards the reference electrode.

For example, the partial oxidation of step (C) may be performed at a voltage equivalent to a voltage of from 0.3 V to 1.5 V, preferably from 0.5 V to 1.2 V, more preferably 0.6 V to 1.1 V, for example at a voltage equivalent to a voltage of about 1 V, towards a Reversible Hydrogen Electrode.

In some embodiments, the partial electrochemical oxidation of step (C) may be performed at a voltage of from 0 V to 2 V towards a Reversible Hydrogen Electrode.

In some embodiments, the partial electrochemical oxidation of step (C) may be performed at a voltage of from 0.3 V to 1.5 V, preferably from 0.5 V to 1.2 V, more preferably 0.6 V to 1.1 V, for example about 1 V, towards a Reversible Hydrogen Electrode.

In some embodiments, step (C) is performed periodically at intervals of from 50 to 5400 seconds.

In some embodiments, step (C) is performed periodically at intervals of from 100 to 5000 seconds.

Preferably, in some embodiments, step (C) is performed periodically at intervals of from 150 to 1000 seconds, more preferably from 200 to 500 seconds, for example about 240 seconds.

In some embodiments, each performance of step (C) is for a duration of from 0.5 to 100 seconds.

Preferably, in some embodiments, each performance of step (C) is for a duration of from 1 to 50 seconds, more preferably 5 to 25 seconds, for example about 10 seconds.

***

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### Examples

### General Experimental Details

### Source of Reagents

Reagents were obtained commercially from Sigma Aldrich unless otherwise mentioned.

### General Methodological Notes

Electrochemical deposition was performed under constant current conditions calculated according to the geometrical surface of the substrate on which the deposition is performed. The deposition was done in a two-electrode electrochemical cell, with a spiral Ni anode placed symmetrically around the titanium mesh cathode. After the deposition, the electrodes were washed with deionized water and transferred into a three-electrode electrochemical cell for oxidation and HER, OER and urea oxidation-assisted water electrolysis measurements.

Before the HER, OER and urea oxidation-assisted water electrolysis were conducted, the deposited composite material was oxidized at 1.0 V vs. RHE. Electrolyte resistance was corrected using hardware settings. HER, OER, and urea oxidation-assisted water electrolysis measurements were done using cyclic voltammetry at a sweep rate of 10 mV s⁻¹.

Electrochemical measurements were done using IVIUM Vertex One potentiostat in a one compartment three-electrode electrochemical cell. A Saturated Calomel Electrode (SCE) served as a reference electrode and potentials were then recalculated to RHE, and a 3×3 cm Ni foam (Goodfellow Cambridge Limited, England) as a counter electrode. KOH solution (Sigma Aldrich), 1 mol dm⁻³, prepared with ultrapure deionized water, was used.

Transmission electron microscopy (TEM) image and electron diffraction patterns were obtained using HRTEM JEOL 2100F Field Emission analytical electron equipped with a spherical aberration corrector operated at 200kV. Scanning electron microscopy (SEM) images were obtained using a Phenom ProX electron microscope (Phenom, the Netherlands) equipped with an EDX detector.

### Effect of Reduced Graphene Oxide

To firstly demonstrate the advantageous effect of the presence of graphene oxide in the deposition solution, Ni@rGO composites were prepared according to step (i) of the method of the invention. Comparative composites made using deposition solutions not containing graphene oxide (hence depositing "pure Nickel") were also prepared.

### Example 1a

The synthesis of a Ni@rGO composite according to step (i) of the method of the invention was performed by direct electrochemical deposition on a titanium grid from a deposition solution comprising 0.2 mol dm⁻³ boric acid (H₃BO₃), 0.5 mol dm⁻³ ammonium chloride (NH₄Cl), and 0.125 mol dm⁻³ nickel-sulfate (NiSO₄), in which graphene oxide with a concentration of 0.13 g dm⁻³ was dispersed.

The deposition was carried out under constant current conditions of 50 mA cm⁻², in a system in which the titanium mesh (substrate) onto which the deposition was carried out was connected to the negative pole of a DC voltage source, and a nickel wire was connected to the positive pole wire. The deposition was carried out for 90 seconds.

### Example 2a

Example 2a was prepared in the same way as Example 1a, except the deposition was carried out under constant current conditions of 200 mA cm⁻².

### Example 3a

Example 3a was prepared in the same way as Example 1a, except the deposition was carried out under constant current conditions of 500 mA cm⁻².

### Comparative Example 1b

Comparative Example 1b was prepared the same way as Example 1a, except no graphene oxide was present in the deposition solution.

### Comparative Example 2b

Comparative Example 2b was prepared in the same way as Comparative Example 1b, except the deposition was carried out under constant current conditions of 200 mA cm⁻².

### Comparative Example 3b

Comparative Example 3b was prepared in the same way as Comparative Example 1b, except the deposition was carried out under constant current conditions of 500 mA cm⁻².

### Results

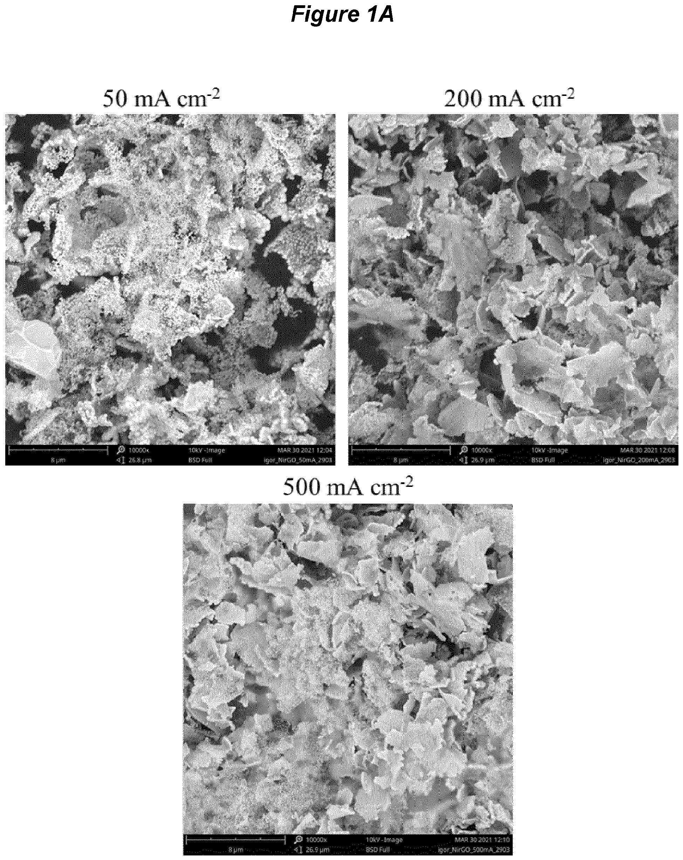

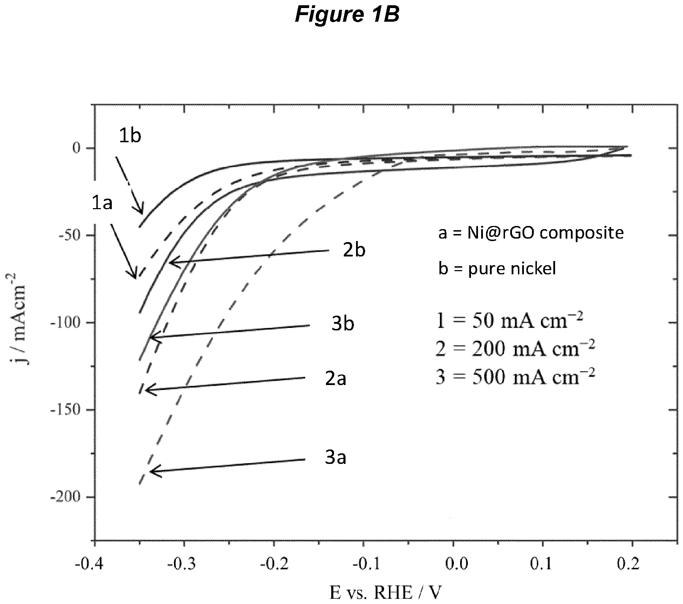

After deposition, the resulting electrodes of Examples 1a, 2a and 3a, and Comparative Examples 1b, 2b and 3b, respectively, were washed with distilled water and transferred to a three-electrode system for testing electrode kinetics. A 1 mol dm⁻³ potassium hydroxide solution was used as an electrolytic solution. Measurements were made in stationary mode at a polarization rate of 5 mV s⁻¹. In the case of the Ni@rGO composites, regardless of the deposition current, the deposits that were obtained were composites of reduced graphene oxide and nickel, two-dimensional forms dictated by the presence of reduced graphene oxide, whereby nickel particles were distributed over sheets of reduced graphene oxide **(****Figure 1A****).** Compared to the pure nickel deposits obtained from identical deposition solutions under the same deposition conditions but without dispersed graphene oxide, the activity of the Ni@rGO composites was (around 50%) higher in each of the tested cases **(****Figure 1B****).**

### Effect of concentration of graphene oxide

To investigate the effect of varying the concentration of graphene oxide in the deposition solution, three Ni@rGO composites were prepared according to step (i) of the method of the invention using graphene oxide with a concentration of 0.13 g dm⁻³, 0.4 g dm⁻³ and 1.3 g dm⁻³ in the deposition solution, respectively.

### Example 4

The synthesis of the three Ni@rGO composites were performed by direct electrochemical deposition on a titanium grid from solutions with a composition of 0.2 mol dm⁻³ boric acid (H₃BO₃) , 0.5 mol dm⁻³ ammonium chloride (NH₄Cl), 0.125 mol dm⁻³ nickel-sulfate (NiSO₄), in which graphene oxide with a concentration of 0.13 g dm⁻³, 0.4 g dm⁻³ and 1.3 g dm⁻³, respectively, was dispersed. In each case, the deposition was carried out under constant current conditions of 200 mA cm⁻² and for 90 seconds.

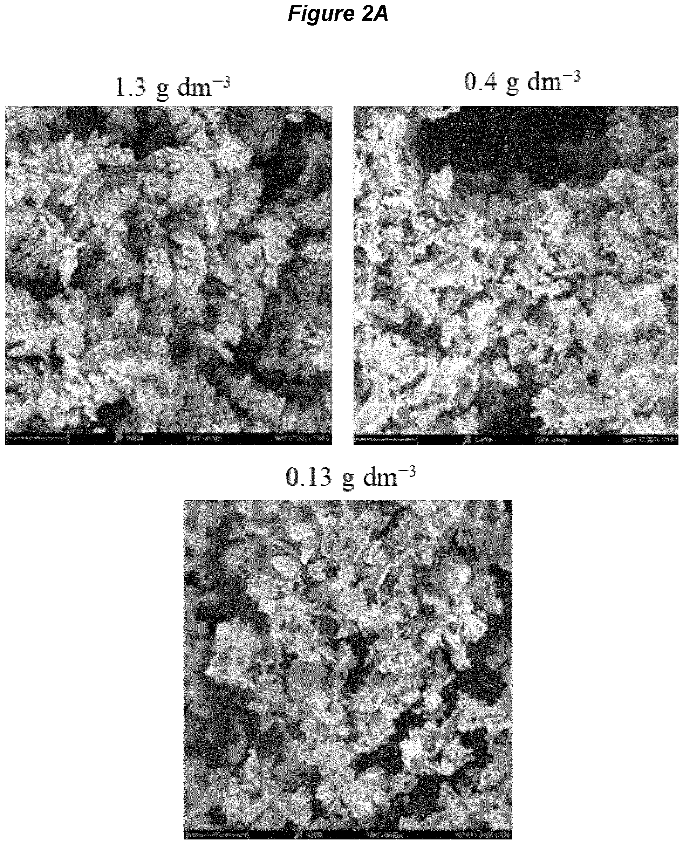

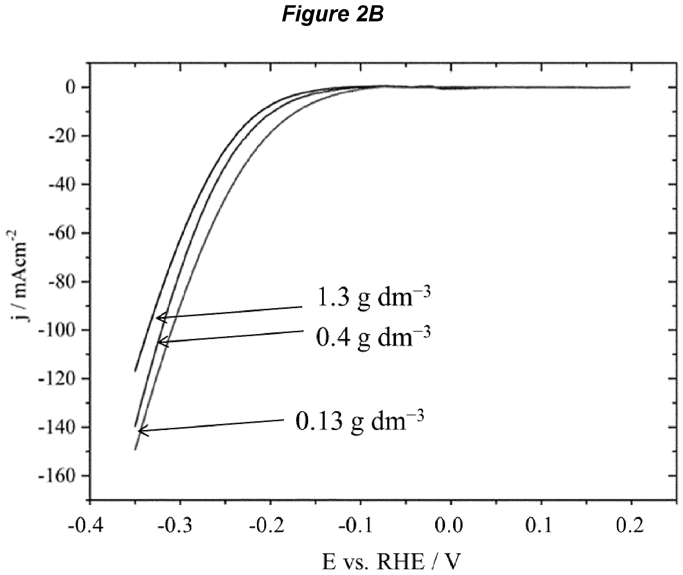

After deposition, the resulting electrodes were washed with distilled water and transferred to a three-electrode system for testing electrode kinetics. A 1 mol dm⁻³ potassium hydroxide solution was used as an electrolytic solution. Measurements were made in stationary mode at a polarization rate of 5 mV s⁻¹. The concentration of graphene oxide was found to partially affect the morphology of the Ni@rGO composite precipitates obtained **(****Figure 2A****),** whereby the highest catalytic activity is obtained for the Ni@rGO composite which was precipitated from the solution with the lowest concentration (0.13 g dm⁻³) of graphene oxide **(****Figure 2B****).** It is thought that this may be because, at higher concentrations, agglomeration of graphene oxide in the deposition solution may occur and reduce flake deposition efficacy.

Without wishing to be bound by theory, the Ni@rGO composites of Examples 1a, 2a, 3a and 4 demonstrate improved catalytic activity for hydrogen evolution compared to the pure nickel composites of Comparative Examples 1b, 2b and 3b, because of adsorbed hydrogen overflow from the nickel to the reduced graphene oxide.

Thus, this is demonstrated to be the case with use of a broad range of concentrations of graphene oxide.

### Transmission Electron Spectroscopy (Ni@rGO)

### Example 5

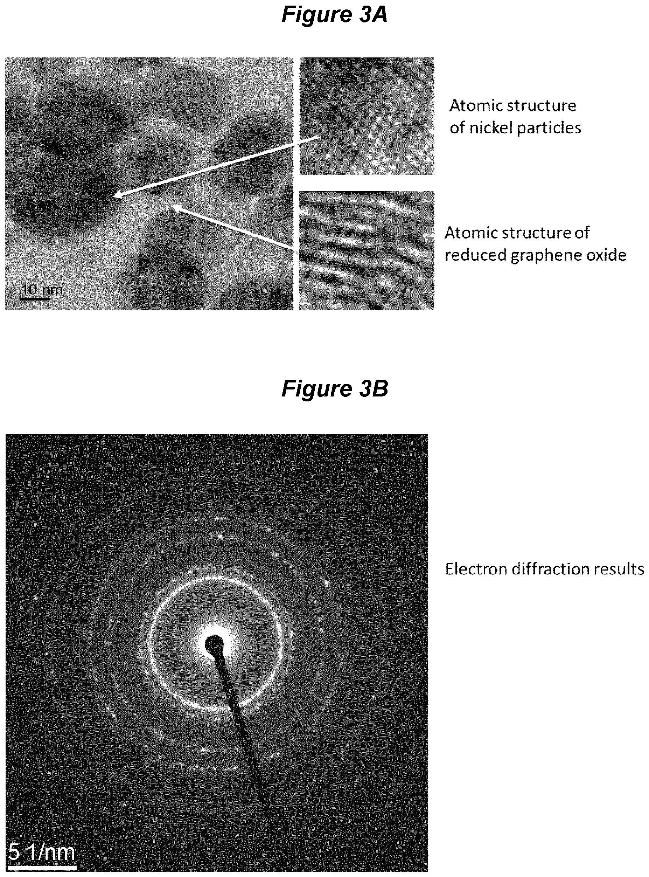

Based on the results of transmission electron microscopy for Example 4 **(****Figure 3A****),** it can be seen that the nickel particles in the Ni@rGO composite have nanometer dimensions. Electron diffraction analysis **(****Figure 3B****)** shows that the nickel lattice is in the form of a surface-centered cubic lattice. Nickel particles are deposited on the layers of reduced graphene oxide, the structure of which is also clearly visible.

### Preparation of the oxidised nickel-reduced graphene composite (ox-Ni@rGO)

To demonstrate the effect of the invention, a (partially) oxidised nickel-reduced graphene composite (ox-Ni@rGO) was prepared according to the method of the invention. A comparative composite comprising only Nickel was also prepared (by use of a deposition solution which did not contain graphene oxide, as before). The currents of hydrogen evolution on electrochemically precipitated nickel and on the Ni@rGO composite both before and after oxidative treatment were measured.

### Example 6

The synthesis of the Ni@rGO composite was performed by direct electrochemical deposition on a titanium grid from a solution of 0.2 mol dm⁻³ boric acid (H₃BO₃), 0.5 mol dm⁻³ ammonium chloride (NH₄Cl), 0.125 mol dm⁻³ nickel sulfate (NiSO₄), in which graphene oxide with a concentration of 0.13 g dm⁻³ was dispersed. The deposition was carried out under constant current conditions of 500 mA cm⁻². The deposition was carried out for 90 seconds. In an analogous way, pure nickel was precipitated on a titanium grid from an identical deposition solution except that graphene oxide was not present.

After deposition, the electrodes were washed with distilled water and transferred to a three-electrode system for electrode kinetics testing. A 1 mol dm⁻³ solution of potassium hydroxide was used as an electrolytic solution. Measurements were made in stationary mode at a polarization rate of 5 mV s⁻¹, at room temperature. The first set of measurements was performed on electrodes that had not been oxidized before testing the rate of hydrogen evolution. As seen earlier with Examples 1a-3a and Comparative Examples 1b-3b, Ni@rGO shows higher catalytic activity than pure Ni.

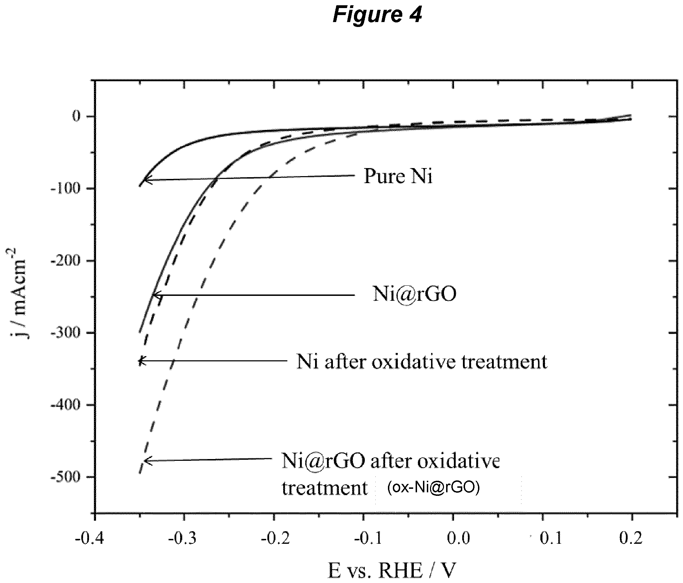

Following this, a new set of electrodes was prepared, which were electrochemically oxidized in the same solution (1 mol dm⁻³ potassium hydroxide solution) before measuring the rate of hydrogen evolution by keeping them at a potential of 1.0 V vs. RHE for 30 seconds. In this way, the ox-Ni@rGO composite was obtained; analogously, a composite "Ni after oxidative treatment" was also obtained. The results show **(****Figure 4****)** that after the oxidative treatment, the activity of the pure nickel electrode increases, as does the ox-Ni@rGO composite. In the second case, the obtained currents are up to 500 mA cm⁻² at -0.35 V towards the Reversible Hydrogen Electrode.

Thus, the ox-Ni@rGO composite shows improved catalytic activity in cathodes for the HER over pure nickel composites, oxidised nickel composites and Ni@rGO composites. Without wishing to be bound by theory, the increase in activity of the ox-Ni@rGO composite is the result of a combination of hydrogen overflow and accelerated water dissociation due to the formed surface phases of oxidised nickel. This surprising synergy of effects, caused by the unique microstructures generated by the methods of the present invention, could not have been predicted.

### Scanning Electron Spectroscopy (ox-Ni@rGO)

### Example 7

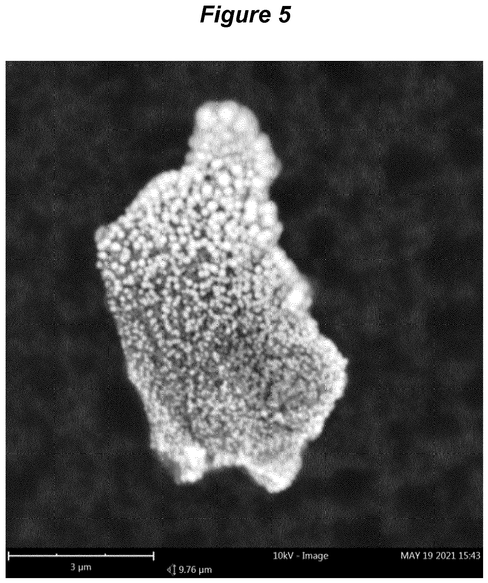

The results of the scanning electron microscopy for Example 7 **(****Figure 5****),** shows a SEM micrograph of a single flake of ox-Ni@rGO composite. The SEM micrograph shows partially oxidised nickel particles dispersed on a single reduced graphene oxide flake.

### Further Oxidative Treatment of oxidised nickel-reduced graphene composite (ox-Ni@rGO)

### Example 8

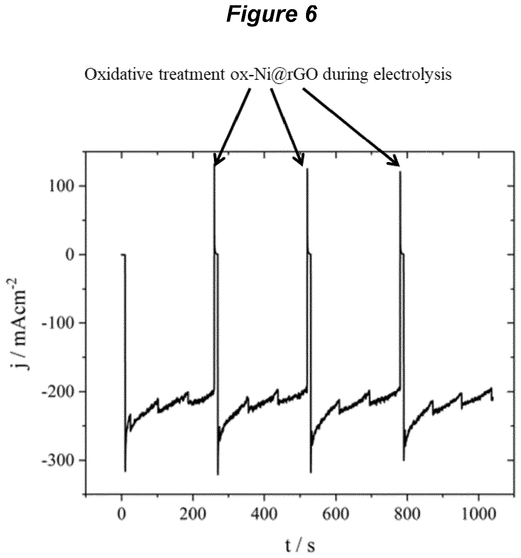

To demonstrate that the activity of the ox-Ni@rGO composite can be maintained by periodic oxidative treatments within the scope of the invention, an ox-Ni@rGO composite was prepared according to Example 6, after which it was subjected to alkaline electrolysis hydrogen evolution conditions at a constant potential of -0.4 V towards RHE. Every 240 seconds, the ox-Ni@rGO composite was subjected to a short oxidative treatment at 1.0 V (10 seconds) towards RHE, after which the hydrogen evolution current returned to the initial value **(****Figure 6****).**

As seen in **Figure 6****,** the increases in catalytic activity of the ox-Ni@rGO over time coincide with each oxidative treatment. Thus, this additional oxidative treatment allows the maintenance of the high activity of the composite.

### Use of oxidised nickel-reduced graphene composite (ox-Ni@rGO) for OER

### Example 9

To demonstrate that the ox-Ni@rGO composite may also effectively perform as an anode catalyst for the OER, electrodes were prepared as described in Example 6, using titanium grid, while deposition was done from a solution of 0.2 mol dm⁻³ boric acid (H₃BO₃), 0.5 mol dm⁻³ ammonium chloride (NH₄Cl), 0.125 mol dm⁻³ nickel sulfate (NiSO₄), in which graphene oxide with a concentration of 0.13 g dm⁻³ was dispersed. The deposition was carried out under constant current conditions of 500 mA cm⁻². The deposition was carried out for 90 seconds. In an analogous way, pure nickel was precipitated on a titanium grid from an identical deposition solution, except that graphene oxide was not present.

After deposition, the electrodes were washed with distilled water and transferred to a three-electrode system for electrode kinetics testing. Following this, the electrodes were electrochemically oxidized in the same solution (1 mol dm⁻³ potassium hydroxide solution) before measuring the rate of OER by keeping them at a potential of 1.0 V vs. RHE for 30 seconds. An ox-Ni@rGO composite and an analogous composite "Ni after oxidative treatment" (ox-Ni) was obtained.

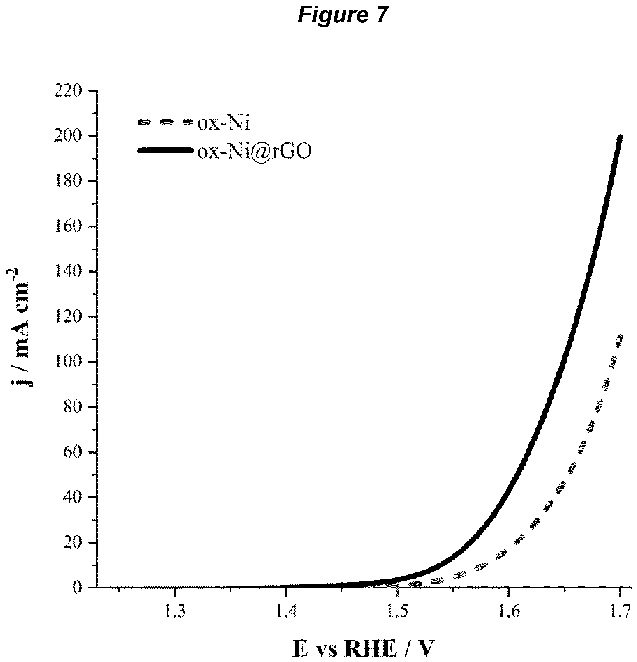

Such obtained ox-Ni and ox-Ni@rGO composites were tested in a 1 mol dm⁻³ solution of potassium hydroxide towards OER. Measurements were made in stationary mode at a polarization rate of 5 mV s-1 at room temperature. As can be seen in **Figure 7****,** the activity of the ox-Ni@rGO composite electrode towards OER is higher compared to the ox-Ni composite. In the first case, the obtained currents are up to 200 mA cm⁻² at 1.7 V towards the Reversible Hydrogen Electrode.

Thus, the ox-Ni@rGO composite shows improved catalytic activity in anodes for the OER over oxidised nickel composites.

### Use of oxidised nickel-reduced graphene composite (ox-Ni@rGO) for Urea oxidation-assisted water electrolysis

### Example 10

To demonstrate that the ox-Ni@rGO composite may also effectively perform as an anode catalyst for the electrolytic production of nitrogen and carbon dioxide under urea oxidation-assisted water electrolysis conditions, ox-Ni and ox-Ni@rGO were prepared according to Example 9.

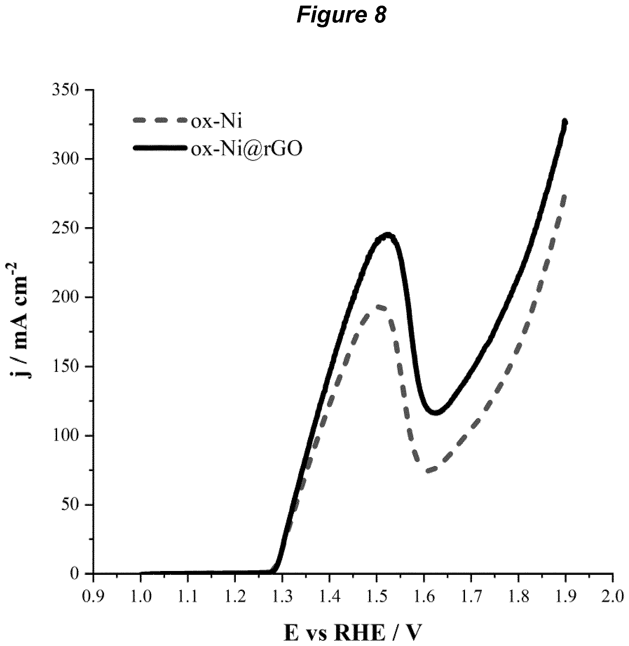

The obtained ox-Ni and ox-Ni@rGO composites were tested in a 1 mol dm⁻³ solution of potassium hydroxide containing 3 mol dm⁻³ urea for urea-oxidation assisted alkaline water electrolysis. Measurements were made in stationary mode at a polarization rate of 5 mV s⁻¹ at room temperature. As can be seen in **Figure 8****,** the activity of the ox-Ni@rGO composite electrode is higher compared to that of the ox-Ni composite.

Thus, the ox-Ni@rGO composite shows improved catalytic activity in anodes for electrolytic urea oxidation under urea oxidation-assisted water electrolysis conditions over oxidised nickel composites.

## Claims

1. A method of preparing a composite material, the method comprising the steps of:
(i) electrochemically depositing material onto a substrate from a deposition solution comprising a nickel (II) salt and graphene oxide, to obtain a nickel-reduced graphene oxide composite material comprising nickel dispersed on reduced graphene oxide, said composite material being deposited on the substrate;
(ii) after step (i), placing the substrate, having the nickel-reduced graphene oxide composite deposited thereon, in an alkaline solution along with a counter electrode; and
(iii) after step (ii), partially electrochemically oxidising the nickel, to obtain a partially oxidised nickel-reduced graphene oxide composite material comprising partially oxidised nickel dispersed on reduced graphene oxide, said composite material being deposited on the substrate.

2. The method of claim 1, wherein the substrate comprises nickel or titanium.

3. The method of claim 1, wherein the substrate contains no, or at most trace amounts of nickel.

4. The method of any one of claims 1 to 3, wherein nickel is present in the composite material, obtained in step (iii), in an amount from 20 to 80 wt.% based on the total weight of the composite material.

5. The method of any one of claims 1 to 4, wherein the concentration of the nickel (II) salt in the deposition solution is from 0.01 to 3 mol dm⁻³, wherein optionally the concentration of the nickel (II) salt in the deposition solution is about 0.125 mol dm⁻³.

6. The method of any one of claims 1 to 5, wherein the concentration of graphene oxide in the deposition solution is from 0.01 to 2 g dm⁻³, wherein optionally the concentration of graphene oxide in the deposition solution is about 0.13 g dm⁻³.

7. The method of any one of claims 1 to 6, wherein the electrochemical deposition of step (i) is performed under constant current conditions, wherein optionally the electrochemical deposition of step (i) is performed at a constant current density selected within the range of 50 to 1000 mA cm⁻², wherein optionally the electrochemical deposition of step (i) is performed at a constant current density of about 500 mA cm⁻².

8. The method of any one of claims 1 to 7, wherein the electrochemical deposition of step (i) is performed for a duration of 5 to 500 seconds, wherein optionally the electrochemical deposition of step (i) is performed for a duration of about 90 seconds.

9. The method of any one of claims 1 to 8, wherein the partial electrochemical oxidation of step (iii) is performed for a duration of 5 to 2000 seconds, wherein optionally the electrochemical oxidation of step (iii) is performed for a duration of about 30 seconds.

10. The method of any one of claims 1 to 9, wherein the partial electrochemical oxidation of step (iii) is performed at a voltage equivalent to a voltage of from 0 V to 2 V towards a Reversible Hydrogen Electrode, wherein optionally the partial electrochemical oxidation of step (iii) is performed at a voltage equivalent to a voltage of about 1.0 V towards a Reversible Hydrogen Electrode.

11. The method of any one of claims 1 to 10, wherein the method further comprises the step(s) of:
(iv) after step (iii), removing the composite material from the substrate to obtain a free composite material; and optionally
(v) after step (iv), comminuting the free composite to obtain a powdered composite.

12. A composite material, obtained or obtainable by a method of any one of claims 1 to 11.

13. A method of electrolytic hydrogen production under alkaline electrolysis conditions, the method comprising the steps of:
(A) setting up a system comprising an aqueous alkaline solution, a first electrode comprising a composite material according to claim 12, a second electrode, and an ion-permeable diaphragm placed between the first and second electrode; and
(B) applying a current between the first electrode and the second electrode to generate hydrogen at the first electrode, wherein optionally the method further comprises the step of:
(C) partially electrochemically oxidising the first electrode, step (C) being performed periodically during the conduction of step (B),
wherein optionally step (C) is performed periodically at intervals of from 50 to 5400 seconds and/or each performance of step (C) is for a duration of from 0.5 to 100 seconds.

14. A method of electrolytic oxygen production under alkaline electrolysis conditions, the method comprising the steps of:
(A) setting up a system comprising an aqueous alkaline solution, a first electrode, a second electrode comprising a composite material according to claim 12, and an ion-permeable diaphragm placed between the first and second electrode; and
(B) applying a current between the first electrode and the second electrode to generate oxygen at the second electrode.

15. A method of electrolytic urea oxidation under urea oxidation-assisted water electrolysis conditions, the method comprising the steps of:
(A) setting up a system comprising a solution comprising an aqueous alkaline solution and urea, a first electrode, a second electrode comprising a composite material according to claim 12, and an ion-permeable diaphragm placed between the first and second electrode; and
(B) applying a current between the first electrode and the second electrode to oxidise urea at the second electrode.
